(19) Europäisches Patentamt
European Patent Office
Office européen des brevets

(11) **EP 4 195 333 A1**

(12) **EUROPEAN PATENT APPLICATION**
published in accordance with Art. 153(4) EPC

(43) Date of publication:
**14.06.2023 Bulletin 2023/24**

(21) Application number: **21853279.4**

(22) Date of filing: **30.04.2021**

(51) International Patent Classification (IPC):
**H01M 4/72** (2006.01)     **H01M 4/73** (2006.01)

(52) Cooperative Patent Classification (CPC):
**H01M 4/72; H01M 4/73;** Y02E 60/10

(86) International application number:
**PCT/JP2021/017266**

(87) International publication number:
**WO 2022/030056 (10.02.2022 Gazette 2022/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.08.2020   JP 2020133327**

(71) Applicant: **The Furukawa Battery Co., Ltd.**
**Yokohama-shi, Kanagawa-ken 240-0006 (JP)**

(72) Inventors:
• **SATO, Atsushi**
**Jyoban-shimofunao-machi, Iwaki-shi,**
**Fukushima 972-**
**8501 (JP)**
• **SUGE, Shinya**
**Jyoban-shimofunao-machi, Iwaki-shi,**
**Fukushima 972-**
**8501 (JP)**
• **HAGIHARA, Hideki**
**Jyoban-shimofunao-machi, Iwaki-shi,**
**Fukushima 972-**
**8501 (JP)**

(74) Representative: **Grünecker Patent- und**
**Rechtsanwälte**
**PartG mbB**
**Leopoldstraße 4**
**80802 München (DE)**

(54) **LIQUID LEAD STORAGE BATTERY**

(57)     There is provided a new liquid lead storage battery in which the potential distribution of a positive electrode grid is good and which can obtain stable performance even in use where extraction current is high. A grid-like substrate (51) of a positive electrode current collector (5) includes a frame bone forming four sides of a rectangular shape, and a plurality of intermediate bones connected to the frame bone and present inward of the frame bone. At least part of a plurality of vertical intermediate bones present in a range between the center between a pair of vertical frame bones (513, 514) and the first vertical frame bone (513) being the vertical frame bone on the side where a lug (11) is not present, are first vertical intermediate bones (61 to 66) extending from the lower frame bone side toward the upper frame bone side while obliquely expanding from each other, and directly reaching an upper frame bone (511). The vertical intermediate bones extending from the lower frame bone side toward the upper frame bone side while obliquely expanding from each other all directly reach the upper frame bone. Angles formed by the first vertical intermediate bones and the upper frame bone on the first vertical frame bone side are less than 90°, and connection points of the first vertical intermediate bones to the upper frame bone are present only in the above range.

FIG. 2

EP 4 195 333 A1

**Description**

Technical Field

The present invention relates to a liquid lead storage battery.

Background Art

An electrode plate group of a general liquid lead storage battery includes a laminate composed of a plurality of positive electrode plates and negative electrode plates alternately disposed with each other, and separators disposed between the positive electrode plates and the negative electrode plates. The positive electrode plate includes a positive electrode current collector and a positive electrode mixture containing a positive electrode active material, and the positive electrode active material contains lead dioxide. The positive electrode current collector includes a rectangular grid-like substrate and a lug continuous with the grid-like substrate, and the positive electrode mixture is held in the grid-like substrate. The lugs of the positive electrode current collectors of the plurality of positive electrode plates are connected together by a positive electrode strap.

The negative electrode plate includes a negative electrode current collector and a negative electrode mixture containing a negative electrode active material, and the negative electrode active material contains metallic lead. The negative electrode current collector includes a rectangular grid-like substrate and a lug continuous with the grid-like substrate, and the negative electrode mixture is held in the grid-like substrate. The lugs of the negative electrode current collectors of the plurality of negative electrode plates are connected together by a negative electrode strap. The positive electrode current collector and the negative electrode current collector are mainly composed of lead or a lead alloy, and openings of the grid-like substrate are filled with the positive electrode mixture or the negative electrode mixture.

As a conventional example of a grid-like substrate, one with a structure including a frame bone forming four sides of a rectangular shape, and a plurality of intermediate bones connected to the frame bone and present inward of the frame bone, is exemplified. The frame bone includes an upper frame bone located on the upper side of the grid-like substrate and extending in the horizontal direction, a lower frame bone located on the lower side of the grid-like substrate and extending in the horizontal direction, and a pair of vertical frame bones extending in the vertical direction. A lug protrudes upward from a position offset from the center of the upper frame bone in its longitudinal direction to the side closer to either of the pair of vertical frame bones.

The plurality of intermediate bones includes a plurality of vertical intermediate bones extending from the upper frame bone toward the lower frame bone side, and a plurality of horizontal intermediate bones connecting the pair of vertical frame bones. Openings to be filled with a positive electrode mixture or a negative electrode mixture are formed by only the intermediate bones or by the intermediate bones and the frame bone. The horizontal intermediate bones include one only extending from one of the pair of vertical frame bones toward the other side or from the other of the pair of vertical frame bones toward the one side, and not connecting the pair of vertical frame bones.

In recent years, the state of use of liquid lead storage batteries for cars has become severe due to the increase in electrical equipment of cars and the improvement in fuel economy. Consequently, the performance to bear the severe use is required for the liquid lead storage batteries for cars. In particular, stop-start vehicles (ISS vehicles) have spread rapidly so that there is a tendency that the number of times of cranking of a car increases.

Therefore, in particular, it is necessary to largely improve the durability of positive electrode plates compared to conventional ones. In order to improve the durability of positive electrode plates, improvement of a paste containing lead powder for use in a process of a method for producing positive electrode plates before formation, and improvement of positive electrode grids (grid substrates of positive electrode current collectors) have been performed.

A conventional general positive electrode grid has a simple grid shape in which all vertical intermediate bones and horizontal intermediate bones intersect orthogonally. In the case of such a simple grid shape, in a portion far from a lug of a positive electrode plate (a portion close to a corner between a vertical frame bone on the side where the lug is not present, and a lower frame bone: an opposite corner area), the path of current is longer than those in the other portions, and therefore the resistance is higher. That is, the positive electrode grid having the simple grid shape has a problem that the potential distribution in the plane is uneven. Following this, the state of use of the positive electrode grid becomes uneven in the plane, leading to the occurrence of stratification or a state where only a portion close to the lug degrades (softens), so that the life performance decreases.

On the other hand, in a liquid lead storage battery described in PTL 1, a positive electrode grid is formed in a shape in which all vertical intermediate bones extend in such a way that the distances therebetween in the left-right direction increase as away from a lug. With such a shape, the path of current from an opposite corner area to the lug becomes shorter than that in the simple grid shape so that the resistance becomes lower, and therefore the potential distribution in the plane becomes better. However, in the case of this shape, since the area of an opening increases as away from the lug, when vibration or impact is applied in on-board use or the like, an active material tends to fall off so that the discharge capacity corresponding to a fallen portion is reduced, and therefore the life tends to decrease.

PTL 2 describes, as a grid substrate of a current collector forming a liquid lead storage battery, a grid having a shape in which vertical intermediate bones on the side near a lug extend perpendicularly to an upper frame bone and a lower frame bone, and the other vertical intermediate bones are inclined so as to expand radially from an opposite corner area. In a grid illustrated in FIG. 1 of PTL 2, the grid includes seven vertical intermediate bones expanding radially, and three of them are not in direct contact with the upper frame bone, but are directly connected to the vertical intermediate bone extending perpendicularly.

In the liquid lead storage battery having the grid with such a shape, when extracting a large current for use in the engine start or the like, a large current is concentrated on the vertical intermediate bones extending perpendicularly according to the Kirchhoff's first law. As a result, in the vertical intermediate bones extending perpendicularly, corrosion progresses rapidly to increase the resistance, and when the corrosion further progresses, there is a possibility of breakage or rupture. Following this, current extracted from the vertical intermediate bones expanding radially is reduced, and therefore there is a possibility that the performance of the battery decreases rapidly.

Citation List

Patent Literature

PTL 1: JP 2019-67522 A
PTL 2: JP 2002-42821 A

Summary of Invention

Technical Problem

It is an object of the present invention to provide a new liquid lead storage battery in which the potential distribution of a positive electrode grid is good and which can obtain stable performance even in use where extraction current is high.

Solution to Problem

In order to achieve the above-described object, one aspect of the present invention provides a liquid lead storage battery having the following configurations (1) to (3).

(1) A liquid lead storage battery includes a positive electrode plate including a positive electrode current collector and a positive electrode mixture. The positive electrode current collector includes a grid-like substrate with a rectangular shape and a lug continuous with the grid-like substrate. The positive electrode mixture is held in the grid-like substrate. The grid-like substrate includes a frame bone forming four sides of the rectangular shape, and a plurality of intermediate bones connected to the frame bone and present inward of the frame bone.

(2) The frame bone includes an upper frame bone located on an upper side of the grid-like substrate and extending in a horizontal direction, a lower frame bone located on a lower side of the grid-like substrate and extending in the horizontal direction, and a pair of vertical frame bones extending in a vertical direction. The lug protrudes upward from a position offset from a center of the upper frame bone in a longitudinal direction to a side closer to either of the pair of vertical frame bones. The plurality of intermediate bones includes a plurality of vertical intermediate bones extending from the upper frame bone toward the lower frame bone side or from the lower frame bone toward the upper frame bone side, and a plurality of horizontal intermediate bones extending from one of the pair of vertical frame bones toward the other side or from the other of the pair of vertical frame bones toward the one side.

(3) At least part of a plurality of the vertical intermediate bones present in a range between a center between the pair of vertical frame bones and the first vertical frame bone being the vertical frame bone on a side where the lug is not present, are the first vertical intermediate bones extending from the lower frame bone side toward the upper frame bone side while obliquely expanding from each other, and directly reaching the upper frame bone. The vertical intermediate bones extending from the lower frame bone side toward the upper frame bone side while obliquely expanding from each other all directly reach the upper frame bone. Angles formed by the first vertical intermediate bones and the upper frame bone on the first vertical frame bone side are less than 90°. Connection points of the first vertical intermediate bones to the upper frame bone are present only in the range.

Advantageous Effects of Invention

According to the present invention, there is provided a new liquid lead storage battery in which the potential distribution of a positive electrode grid is good and which can obtain stable performance even in use where extraction current is high.

Brief Description of Drawings

FIG. 1 is a partial sectional view for explaining the structure of a liquid lead storage battery according to one embodiment of the present invention;
FIG. 2 is a front view illustrating a positive electrode current collector included in a liquid lead storage battery according to a first embodiment of the present invention;
FIG. 3 is a diagram illustrating a convergence point of lines extending first vertical intermediate bones downward below a lower frame bone and a convergence point of lines extending second vertical intermediate bones upward above an upper frame bone, in the positive electrode current collector of the first embodiment;
FIG. 4 is a front view illustrating a positive electrode current collector included in a liquid lead storage battery according to a second embodiment of the present invention;

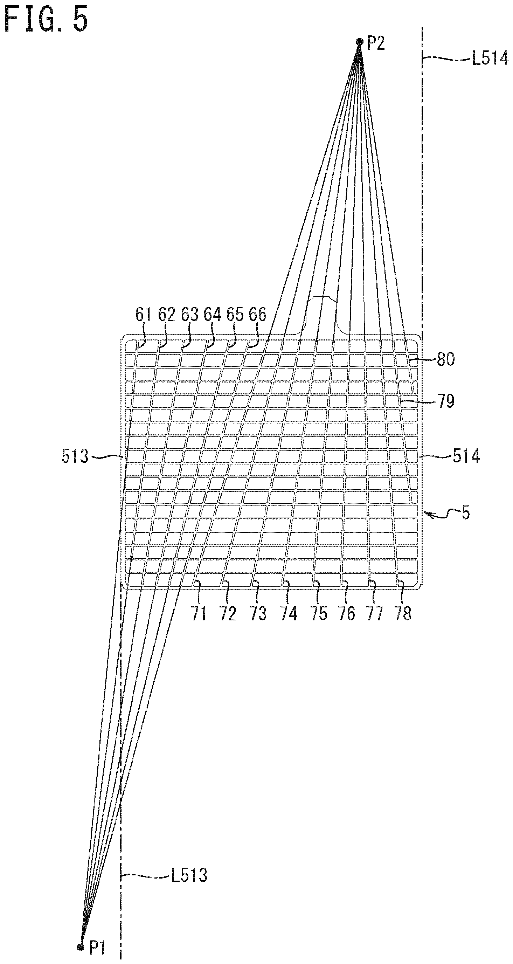

FIG. 5 is a diagram illustrating a convergence point of lines extending first vertical intermediate bones downward below a lower frame bone and a convergence point of lines extending second vertical intermediate bones upward above an upper frame bone, in the positive electrode current collector of the second embodiment;
FIG. 6 is a front view illustrating a positive electrode current collector included in a liquid lead storage battery according to a third embodiment of the present invention;
FIG. 7 is a diagram illustrating a convergence point of lines extending first vertical intermediate bones downward below a lower frame bone and a convergence point of lines extending second vertical intermediate bones upward above an upper frame bone, in the positive electrode current collector of the third embodiment;
FIG. 8 is a front view illustrating a positive electrode current collector included in a liquid lead storage battery according to a fourth embodiment of the present invention;
FIG. 9 is a diagram illustrating a convergence point of lines extending first vertical intermediate bones downward below a lower frame bone and a convergence point of lines extending second vertical intermediate bones upward above an upper frame bone, in the positive electrode current collector of the fourth embodiment;
FIG. 10 is a front view illustrating a positive electrode current collector included in a liquid lead storage battery according to a fifth embodiment of the present invention;
FIG. 11 is a diagram illustrating a convergence point of lines extending first vertical intermediate bones downward below a lower frame bone and a convergence point of lines extending second vertical intermediate bones upward above an upper frame bone, in the positive electrode current collector of the fifth embodiment;
FIG. 12 is a front view illustrating a positive electrode current collector of Comparative Example 1;
FIG. 13 is a front view illustrating a positive electrode current collector of Comparative Example 2; and
FIG. 14 is a front view illustrating a positive electrode current collector of Comparative Example 3.

Description of Embodiments

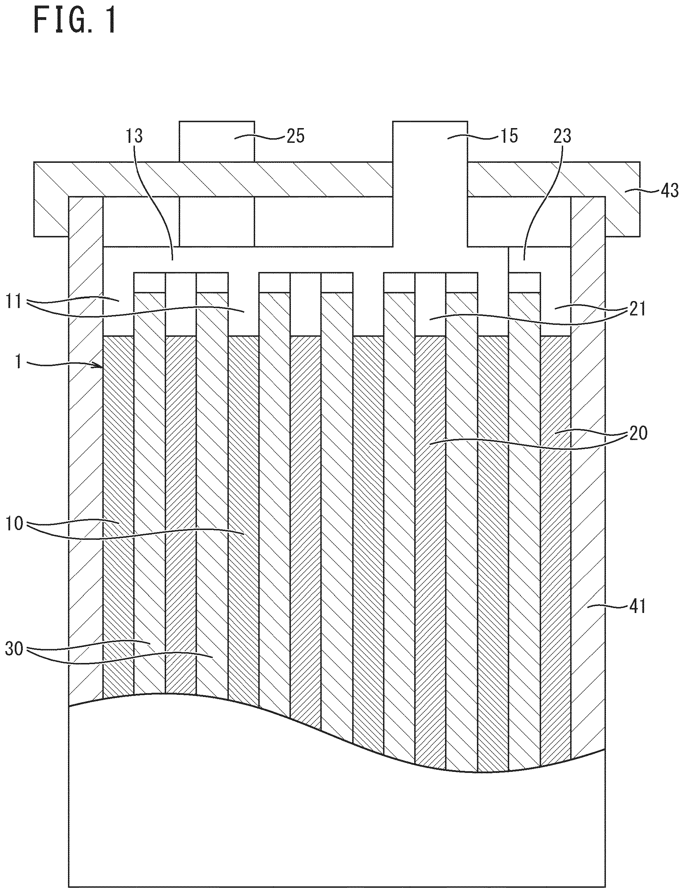

Hereinafter, embodiments of the present invention will be described, but the present invention is not limited to the embodiments described below. In the embodiments described below, limitations technically preferable for carrying out the present invention are made, but these limitations are not essential requirements of the present invention.
As illustrated in FIG. 1, a liquid lead storage battery according to this embodiment includes an electrode plate group 1 in which a plurality of positive electrode plates 10 and a plurality of negative electrode plates 20 are alternately stacked with ribbed separators 30 interposed therebetween. The electrode plate groups 1 are housed, along with a non-illustrated electrolytic solution, in cell chambers of a battery case 41 such that the stacking direction of the electrode plate groups 1 is along the horizontal direction (i.e. plate surfaces of the positive electrode plates 10 and the negative electrode plates 20 are along the vertical direction), and the electrode plate groups 1 are immersed in the electrolytic solution in the cell chambers of the battery case 41. Specifically, the liquid lead storage battery according to this embodiment includes the electrode plate groups 1 and the battery case 41 having the cell chambers housing the electrode plate groups 1 along with the electrolytic solution, the electrode plate groups 1 are each housed in one of the cell chambers, and the number of the positive electrode plates 10 forming the electrode plate group 1 is equal to or less than the number of the negative electrode plates 20. The number of the positive electrode plates 10 may be equal to the number of the negative electrode plates 20 or may be greater than the number of the negative electrode plates 20.

The positive electrode plate 10 includes a positive electrode current collector and a positive electrode mixture containing a positive electrode active material, and the positive electrode active material contains lead dioxide. The positive electrode current collector includes a rectangular grid-like substrate and a lug 11 continuous with the grid-like substrate, and the positive electrode mixture is held in the grid-like substrate. The negative electrode plate 20 includes a negative electrode current collector and a negative electrode mixture containing a negative electrode active material, and the negative electrode active material contains metallic lead. The negative electrode current collector includes a rectangular grid-like substrate and a lug 21 continuous with the grid-like substrate, and the negative electrode mixture is held in the grid-like substrate.

The positive electrode mixture or the negative electrode mixture is filled in openings of the corresponding grid-like substrate and is present as an active material layer on both plate surfaces of the grid-like substrate.

The positive electrode current collector will be described in detail later.

The negative electrode current collector forming the negative electrode plate 20 is formed by a continuous casting method. As a negative electrode current collector producing method other than the continuous casting method, a lead alloy casting method, a punching method for a lead alloy rolled plate, or an expanding method using a lead alloy rolled plate can be cited. The separator 30 is a porous film body made of resin, glass, or the like and has a flat-plate base surface and, as needed, a fold-like rib protruding in a direction perpendicular to the plane direction of the base surface.

The lugs 11 of the plurality of positive electrode plates 10 are connected together by a positive electrode strap 13, and the lugs 21 of the plurality of negative electrode plates 20 are connected together by a negative electrode strap 23. The positive electrode strap 13 is connected to one end of a positive electrode terminal 15, and the negative electrode strap 23 is connected to one end of a negative electrode terminal 25. The other end of the positive electrode terminal 15 and the other end of the negative electrode terminal 25 pass through a lid 43 closing an opening of the battery case 41 and are exposed to the outside of a case body of the liquid lead storage battery formed by the battery case 41 and the lid 43.

[Positive Electrode Current Collector]

<First Embodiment>

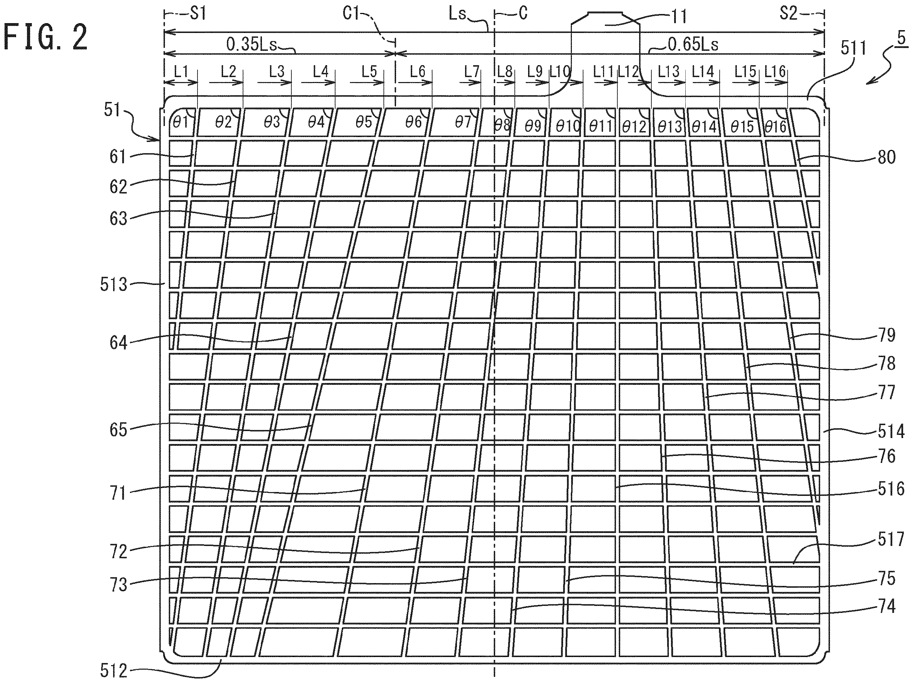

FIG. 2 illustrates a first embodiment of a positive electrode current collector forming a positive electrode plate 10. As illustrated in FIG. 2, a positive electrode current collector 5 of the first embodiment includes a horizontally long rectangular grid-like substrate 51 and a lug 11 continuous with the grid-like substrate, and a positive electrode mixture is held in the grid-like substrate 51. The grid-like substrate 51 includes a frame bone forming four sides of the rectangular shape, and a plurality of intermediate bones connected to the frame bone and present inward of the frame bone. In the rectangular shape forming the frame bone, the horizontal side is longer than the vertical side.

The frame bone includes an upper frame bone 511 located on the upper side of the grid-like substrate and extending in the horizontal direction, a lower frame bone 512 located on the lower side of the grid-like substrate and extending in the horizontal direction, a left frame bone 513 located on the left side of the grid-like substrate and extending in the vertical direction, and a right frame bone 514 located on the right side of the grid-like substrate and extending in the vertical direction.

The lug 11 protrudes upward from a position offset from the center of the upper frame bone 511 in its longitudinal direction to the right frame bone 514 side. The plurality of intermediate bones is formed by first vertical intermediate bones 61 to 65 extending from the lower frame bone 512 side toward the upper frame bone 511 side while obliquely expanding from each other, and directly reaching the upper frame bone 511, second vertical intermediate bones 71 to 80 extending from the upper frame bone 511 toward the lower frame bone 512 side while obliquely expanding from each other, a vertical intermediate bone 516 extending parallel to the left frame bone 513 and the right frame bone 514 and connecting the upper frame bone 511 and the lower frame bone 512 to each other, and 17 horizontal intermediate bones 517 connecting the left frame bone 513 and the right frame bone 514 to each other. The horizontal intermediate bones 517 extend parallel to the upper frame bone 511 and the lower frame bone 512.

The cross-sectional areas of the upper frame bone 511, the left frame bone 513, and the right frame bone 514 are greater than the cross-sectional areas of the first vertical intermediate bones 61 to 65, the second vertical intermediate bones 71 to 80, the vertical intermediate bone 516, and the horizontal intermediate bones 517.

The vertical intermediate bones extending from the lower frame bone 512 side toward the upper frame bone 511 side while obliquely expanding from each other are only the first vertical intermediate bones 61 to 65, and all of them directly reach the upper frame bone 511.

Table 1 shows distances Ln of the first vertical intermediate bones 61 to 65, the second vertical intermediate bones 71 to 80, and the vertical intermediate bone 516 from a first reference line (a line indicating the center position of the left frame bone 513 in its width direction) S1, ratios Ln/Ls of the distances Ln to a distance (a distance between the pair of vertical frame bones) Ls between the first reference line S1 and a second reference line (a line indicating the center position of the right frame bone 514 in its width direction) S2, and angles θn formed by the first vertical intermediate bones 61 to 65, the second vertical intermediate bones 71 to 80, and the vertical intermediate bone 516, and the upper frame bone 511 on the left frame bone 513 side. The distance Ls is 135 mm.

[Table 1]

| n | Ln (mm) | Ln/Ls | θn (°) | State |
|---|---|---|---|---|
| 1 | 7 | 0.05 | 85 | Radially upward |
| 2 | 16 | 0.12 | 83 | |
| 3 | 26 | 0.19 | 81 | |
| 4 | 35 | 0.26 | 79 | |
| 5 | 45 | 0.33 | 77 | |
| 6 | 55 | 0.41 | 80 | Radially downward |
| 7 | 65 | 0.48 | 82 | |
| 8 | 72 | 0.53 | 84 | |
| 9 | 79 | 0.59 | 86 | |
| 10 | 86 | 0.64 | 88 | |
| 11 | 93 | 0.69 | 90 | |
| 12 | 100 | 074 | 92 | |
| 13 | 107 | 079 | 94 | |
| 14 | 114 | 0.84 | 96 | |
| 15 | 122 | 0.90 | 98 | |
| 16 | 128 | 0.95 | 100 | |

Start points of the first vertical intermediate bones 61 to 65 (connection points to the upper frame bone) are all present between the center (the center line C) between the pair of vertical frame bones (the left frame bone 513 and the right frame bone 514) and the left frame bone (the first vertical frame bone being the vertical frame bone on the side where the lug is not present) 513, and are not present between the center line C and the right frame bone 514. Further, the range in which the start points of the first vertical intermediate bones 61 to 65 are present is only up to a position where the distance from the left frame bone 513 becomes 7/20 of the distance Ls between the pair of vertical frame bones (i.e., the range up to a line C1 where the distance from the first reference line S1 becomes 0.35 Ls).

Angles θ1 to θ5 formed by the first vertical intermediate bones 61 to 65 and the upper frame bone 511 on the left frame bone 513 side are less than 90°. Angles θ6 to θ10 formed by the second vertical intermediate bones 71 to 76 and the upper frame bone 511 on the left frame bone 513 side are less than 90°, and angles θ12 to θ16 formed by the second vertical intermediate bones 76 to 80 and the upper frame bone 511 on the left frame bone 513 side are greater than 90°. An angle θ11 formed by the vertical intermediate bone 516 and the upper frame bone 511 is 90°.

The range in which start points of the second vertical intermediate bones 71 to 80 (connection points to the upper frame bone) are present is only up to a position where the distance from the right frame bone 514 becomes 13/20 of the distance Ls between the pair of vertical frame bones (i.e., the range up to the line C1 where the distance from the second reference line S2 becomes 0.65 Ls).

The first vertical intermediate bones 62 to 65 connect the upper frame bone 511 and the lower frame bone 512 to each other (the first vertical intermediate bone 62 extends from the upper frame bone 511 and reaches a corner between the lower frame bone 512 and the left frame bone 513), but the first vertical intermediate bone 61 does not reach the lower frame bone 512 and connects the upper frame bone 511 and the horizontal intermediate bones 517 to each other. The second vertical intermediate bones 71 to 78 connect the upper frame bone 511 and the lower frame bone 512 to each other, but the second vertical intermediate bones 79, 80 do not reach the lower frame bone 512 and connect the upper frame bone 511 and the right frame bone 514 to each other.

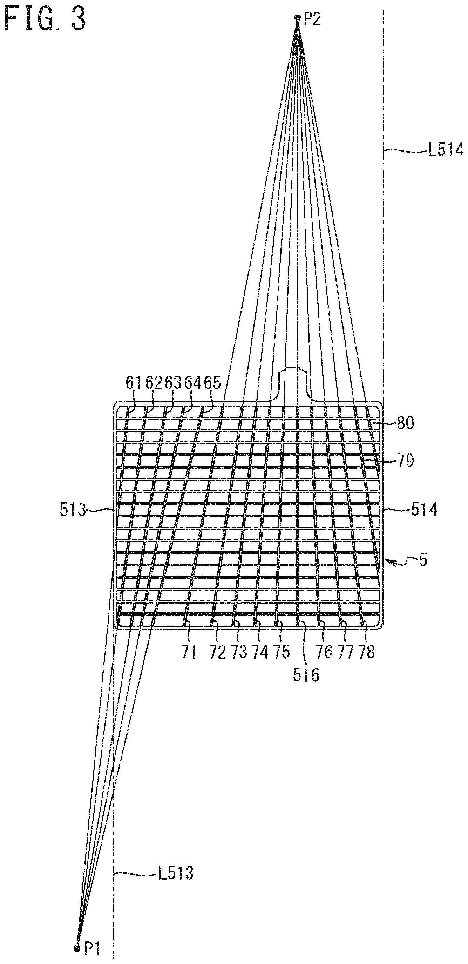

As illustrated in FIG. 3, lines extending the first vertical intermediate bones 61 to 65 and the vertical intermediate bone 516 downward below the lower frame bone 512 converge to a single point. This convergence point P1 is located outward of an extension line L513 of the left frame bone 513. Lines extending the second vertical intermediate bones 71 to 80 upward above the upper frame bone 511 converge to a single point. This convergence point P2 is located inward of an extension line L514 of the right frame bone 514 right above the vertical intermediate bone 516.

The positive electrode current collector 5 of the first embodiment is formed by punching a lead alloy rolled plate. As a positive electrode current collector producing method other than the punching method, a lead alloy casting method or an expanding method using a lead alloy rolled plate can be cited.

<Second Embodiment>

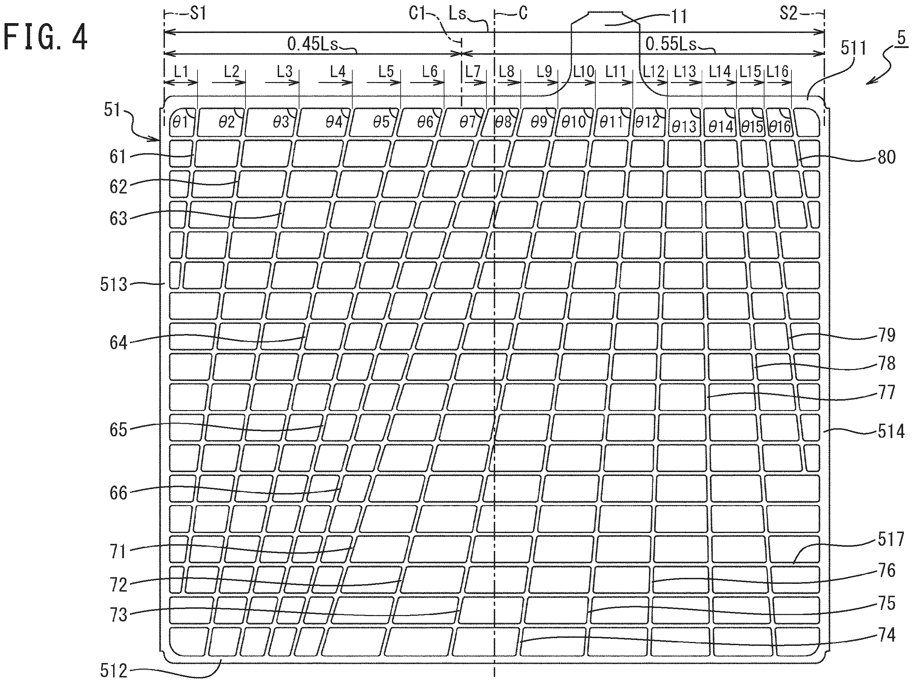

FIG. 4 illustrates a second embodiment of a positive electrode current collector forming a positive electrode plate 10. The positive electrode current collector of the second embodiment is different in design from the vertical intermediate bones of the positive electrode current collector of the first embodiment, but is the same other than that.

As illustrated in FIG. 4, in a positive electrode current collector 5 of the second embodiment, a plurality of intermediate bones is formed by first vertical intermediate bones 61 to 66 extending from the lower frame bone 512 side toward the upper frame bone 511 side while obliquely expanding from each other, and directly reaching the upper frame bone 511, second vertical intermediate bones 71 to 80 extending from the upper frame bone 511 toward the lower frame bone 512 side while obliquely expanding from each other, and 17 horizontal intermediate bones 517 connecting a left frame bone 513 and a right frame bone 514 to each other. The horizontal intermediate bones 517 extend parallel to the upper frame bone 511 and the lower frame bone 512.

The cross-sectional areas of the upper frame bone 511, the left frame bone 513, and the right frame bone 514 are greater than the cross-sectional areas of the first vertical intermediate bones 61 to 66, the second vertical intermediate bones 71 to 80, and the horizontal intermediate bones 517.

The vertical intermediate bones extending from the lower frame bone 512 side toward the upper frame bone 511 side while obliquely expanding from each other are only the first vertical intermediate bones 61 to 66, and all of them directly reach the upper frame bone 511.

Table 2 shows distances Ln of the first vertical intermediate bones 61 to 66 and the second vertical intermediate bones 71 to 80 from a first reference line (a line indicating the center position of the left frame bone 513 in its width direction) S1, ratios Ln/Ls of the distances Ln to a distance (a distance between the pair of vertical frame bones) Ls between the first reference line S1 and a second reference line (a line indicating the center position of the right frame bone 514 in its width direction) S2, and angles θn formed by the first vertical intermediate bones 61 to 66 and the second vertical intermediate bones 71 to 80, and the upper frame bone 511 on the left frame bone 513 side. The distance Ls is 135 mm.

[Table 2]

| n | Ln (mm) | Ln/Ls | θn (°) | State |
|---|---|---|---|---|
| 1 | 7 | 0.05 | 85 | Radially upward |
| 2 | 17 | 013 | 83 | |
| 3 | 28 | 0.21 | 80 | |
| 4 | 39 | 0.29 | 78 | |
| 5 | 49 | 0.36 | 76 | |
| 6 | 57 | 0.42 | 75 | |
| 7 | 66 | 0.49 | 73 | Radially downward |
| 8 | 73 | 0.54 | 75 | |
| 9 | 81 | 0.60 | 79 | |
| 10 | 88 | 0.65 | 82 | |
| 11 | 96 | 0.71 | 85 | |
| 12 | 103 | 0.76 | 88 | |
| 13 | 110 | 0.81 | 91 | |
| 14 | 117 | 0.87 | 94 | |
| 15 | 123 | 0.91 | 96 | |
| 16 | 128 | 0.95 | 99 | |

Start points of the first vertical intermediate bones 61 to 66 (connection points to the upper frame bone) are all present between the center (the center line C) between the pair of vertical frame bones (the left frame bone 513 and the right frame bone 514) and the left frame bone (the first vertical frame bone being the vertical frame bone on the side where a lug is not present) 513, and are not present between the center line C and the right frame bone 514. Further, the range in which the start points of the first vertical intermediate bones 61 to 66 are present is only up to a position where the distance from the left frame bone 513 becomes 9/20 of the distance Ls between the pair of vertical frame bones (i.e., the range up to a line C1 where the distance from the first reference line S1 becomes 0.45 Ls).

Angles $\theta1$ to $\theta6$ formed by the first vertical intermediate bones 61 to 66 and the upper frame bone 511 on the left frame bone 513 side are less than 90°. Angles $\theta7$ to $\theta12$ formed by the second vertical intermediate bones 71 to 76 and the upper frame bone 511 on the left frame bone 513 side are less than 90°, and angles $\theta13$ to $\theta16$ formed by the second vertical intermediate bones 77 to 80 and the upper frame bone 511 on the left frame bone 513 side are greater than 90°.

The range in which start points of the second vertical intermediate bones 71 to 80 (connection points to the upper frame bone) are present is only up to a position where the distance from the right frame bone 514 becomes 11/20 of the distance Ls between the pair of vertical frame bones (i.e., the range up to the line C1 where the distance from the second reference line S2 becomes 0.55 Ls).

The first vertical intermediate bones 63 to 66 connect the upper frame bone 511 and the lower frame bone 512 to each other, but the first vertical intermediate bones 61, 62 do not reach the lower frame bone 512 and connect the upper frame bone 511 and the horizontal intermediate bones 517 to each other. The second vertical intermediate bones 71 to 78 connect the upper frame bone 511 and the lower frame bone 512 to each other, but the second vertical intermediate bones 79, 80 do not reach the lower frame bone 512 and connect the upper frame bone 511 and the horizontal intermediate bones 517 to each other.

As illustrated in FIG. 3, lines extending the first vertical intermediate bones 61 to 66 downward below the lower frame bone 512 converge to a single point. This convergence point P1 is located outward of an extension line L513 of the left frame bone 513. Lines extending the second vertical intermediate bones 71 to 80 upward above the upper frame bone 511 converge to a single point. This convergence point P2 is located inward of an extension line L514 of the right frame bone 514.

<Third Embodiment>

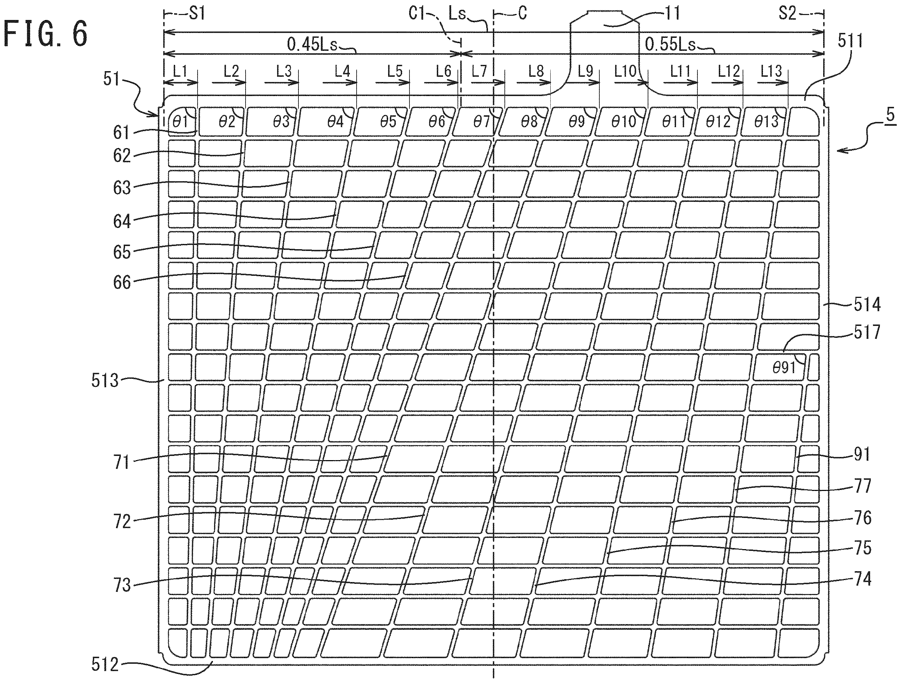

FIG. 6 illustrates a third embodiment of a positive electrode current collector forming a positive electrode plate 10. The positive electrode current collector of the third embodiment is different in design from the vertical intermediate bones of the positive electrode current collector of the first embodiment, but is the same other than that.

As illustrated in FIG. 6, in a positive electrode current collector 5 of the second embodiment, a plurality of intermediate bones is formed by first vertical intermediate bones 61 to 66 extending from the lower frame bone 512 side toward the upper frame bone 511 side while obliquely expanding from each other, and directly reaching the upper frame bone 511, second vertical intermediate bones 71 to 77 extending from the upper frame bone 511 toward the lower frame bone 512 side while obliquely expanding from each other, a reinforcing bone 91, and 17 horizontal intermediate bones 517 connecting a left frame bone 513 and a right frame bone 514 to each other. The horizontal intermediate bones 517 extend parallel to the upper frame bone 511 and the lower frame bone 512.

The cross-sectional areas of the upper frame bone 511, the left frame bone 513, and the right frame bone 514 are greater than the cross-sectional areas of the first vertical intermediate bones 61 to 66, the second vertical intermediate bones 71 to 77, the horizontal intermediate bones 517, and the reinforcing bone 91.

The vertical intermediate bones extending from the lower frame bone 512 side toward the upper frame bone 511 side while obliquely expanding from each other are only the first vertical intermediate bones 61 to 66, and all of them directly reach the upper frame bone 511.

Table 3 shows distances Ln of the first vertical intermediate bones 61 to 66 and the second vertical intermediate bones 71 to 77 from a first reference line (a line indicating the center position of the left frame bone 513 in its width direction) S1, ratios Ln/Ls of the distances Ln to a distance (a distance between the pair of vertical frame bones) Ls between the first reference line S1 and a second reference line (a line indicating the center position of the right frame bone 514 in its width direction) S2, and angles $\theta n$ formed by the first vertical intermediate bones 61 to 66 and the second vertical intermediate bones 71 to 77, and the upper frame bone 511 on the left frame bone 513 side. The distance Ls is 135 mm.

[Table 3]

| n | Ln (mm) | Ln/Ls | θn (°) | State |
|---|---------|-------|--------|-------|
| 1 | 7 | 0.05 | 89 | Radially upward |
| 2 | 16 | 0.12 | 86 | |
| 3 | 27 | 0.20 | 83 | |
| 4 | 39 | 0.29 | 79 | |
| 5 | 50 | 0.37 | 76 | |
| 6 | 60 | 0.44 | 73 | |
| 7 | 70 | 0.52 | 72 | Radially downward |
| 8 | 79 | 0.59 | 73 | |
| 9 | 89 | 0.66 | 75 | |
| 10 | 99 | 0.73 | 77 | |
| 11 | 110 | 0.81 | 79 | |
| 12 | 119 | 0.88 | 81 | |
| 13 | 128 | 0.95 | 82 | |

Start points of the first vertical intermediate bones 61 to 66 (connection points to the upper frame bone) are all present between the center (the center line C) between the pair of vertical frame bones (the left frame bone 513 and the right frame bone 514) and the left frame bone (the first vertical frame bone being the vertical frame bone on the side where a lug is not present) 513, and are not present between the center line C and the right frame bone 514. Further, the range in which the start points of the first vertical intermediate bones 61 to 66 are present is only up to a position where the distance from the left frame bone 513 becomes 9/20 of the distance Ls between the pair of vertical frame bones (i.e., the range up to a line C1 where the distance from the first reference line S1 becomes 0.45 Ls).

Angles θ1 to θ6 formed by the first vertical intermediate bones 61 to 66 and the upper frame bone 511 on the left frame bone 513 side are less than 90°. Angles θ7 to θ13 formed by the second vertical intermediate bones 71 to 77 and the upper frame bone 511 on the left frame bone 513 side are less than 90°. An angle θ14 formed by the reinforcing bone 91 and the horizontal intermediate bone 517 on the left frame bone 513 side is greater than θ13 and less than 90°.

The range in which start points of the second vertical intermediate bones 71 to 77 are present is only up to a position where the distance from the right frame bone 514 becomes 11/20 of the distance Ls between the pair of vertical frame bones (i.e., the range up to the line C1 where the distance from the second reference line S2 becomes 0.55 Ls).

The first vertical intermediate bones 61 to 66 all connect the upper frame bone 511 and the lower frame bone 512 to each other. The second vertical intermediate bones 71 to 77 all connect the upper frame bone 511 and the lower frame bone 512 to each other. The reinforcing bone 91 connects the lower frame bone 512 and the horizontal intermediate bones 517 to each other.

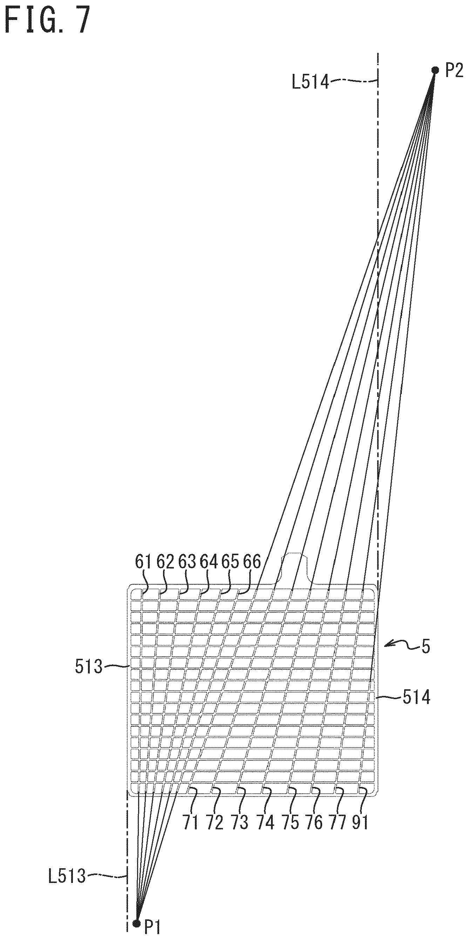

As illustrated in FIG. 7, lines extending the first vertical intermediate bones 61 to 66 downward below the lower frame bone 512 converge to a single point. This convergence point P1 is located inward of an extension line L513 of the left frame bone 513. Lines extending the second vertical intermediate bones 71 to 77 and the reinforcing bone 91 upward above the upper frame bone 511 converge to a single point. This convergence point P2 is located outward of an extension line L514 of the right frame bone 514.

<Fourth Embodiment>

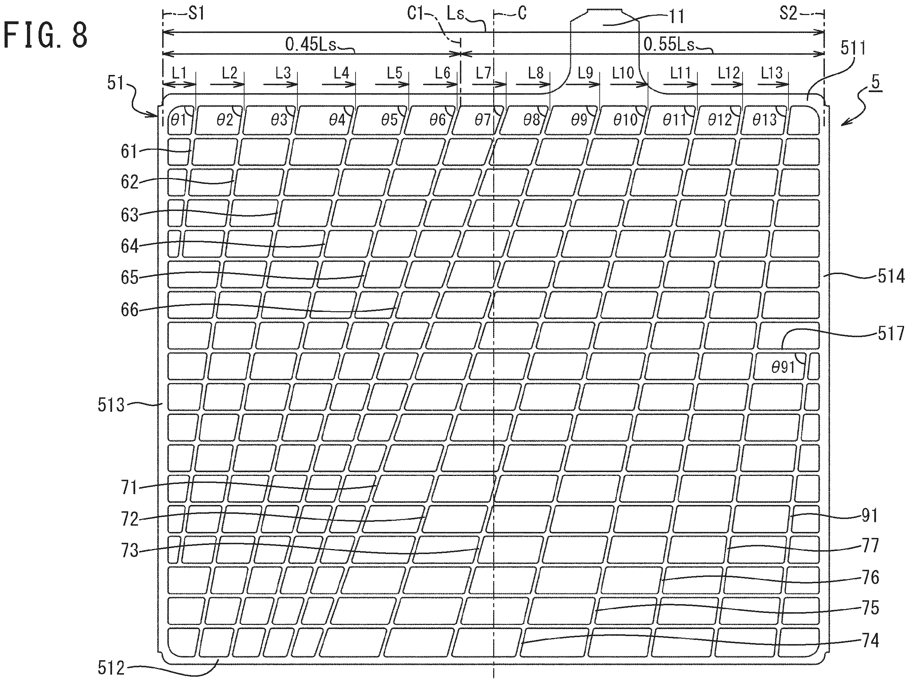

FIG. 8 illustrates a fourth embodiment of a positive electrode current collector forming a positive electrode plate 10. The positive electrode current collector of the fourth embodiment is different in design from the vertical intermediate bones of the positive electrode current collector of the first embodiment, but is the same other than that.

As illustrated in FIG. 8, in a positive electrode current collector 5 of the fourth embodiment, a plurality of intermediate bones is formed by first vertical intermediate bones 61 to 66 extending from the lower frame bone 512 side toward the upper frame bone 511 side while obliquely expanding from each other, and directly reaching the upper frame bone 511, second vertical intermediate bones 71 to 77 extending from the upper frame bone 511 toward the lower frame bone 512 side while obliquely expanding from each other, a reinforcing bone 91, and 17 horizontal intermediate bones 517 connecting a left frame bone 513 and a right frame bone 514 to each other. The horizontal intermediate bones 517 extend parallel to the upper frame bone 511 and the lower frame bone 512.

The cross-sectional areas of the upper frame bone 511, the left frame bone 513, and the right frame bone 514 are greater than the cross-sectional areas of the first vertical intermediate bones 61 to 66, the second vertical intermediate bones 71 to 77, the horizontal intermediate bones 517, and the reinforcing bone 91.

The vertical intermediate bones extending from the lower frame bone 512 side toward the upper frame bone 511 side while obliquely expanding from each other are only the first vertical intermediate bones 61 to 66, and all of them directly reach the upper frame bone 511.

Table 4 shows distances Ln of the first vertical intermediate bones 61 to 66 and the second vertical intermediate bones 71 to 77 from a first reference line (a line indicating the center position of the left frame bone 513 in its width direction) S1, ratios Ln/Ls of the distances Ln to a distance (a distance between the pair of vertical frame bones) Ls between the first reference line S1 and a second reference line (a line indicating the center position of the right frame bone 514 in its width direction) S2, and angles θn formed by the first vertical intermediate bones 61 to 66 and the second vertical intermediate bones 71 to 77, and the upper frame bone 511 on the left frame bone 513 side. The distance Ls is 135 mm.

[Table 4]

| n | Ln (mm) | Ln/Ls | θn (°) | State |
|---|---|---|---|---|
| 1 | 7 | 0.05 | 84 | Radially upward |
| 2 | 16 | 0.12 | 82 | |
| 3 | 28 | 0.21 | 80 | |
| 4 | 39 | 0.29 | 77 | |
| 5 | 50 | 0.37 | 75 | |
| 6 | 60 | 0.44 | 73 | |
| 7 | 70 | 0.52 | 71 | Radially downward |
| 8 | 79 | 0.59 | 73 | |
| 9 | 89 | 0.66 | 75 | |
| 10 | 99 | 0.73 | 77 | |
| 11 | 109 | 0.81 | 79 | |
| 12 | 119 | 0.88 | 80 | |
| 13 | 128 | 0.95 | 82 | |

Start points of the first vertical intermediate bones 61 to 66 (connection points to the upper frame bone) are all present between the center (the center line C) between the pair of vertical frame bones (the left frame bone 513 and the right frame bone 514) and the left frame bone (the first vertical frame bone being the vertical frame bone on the side where a lug is not present) 513, and are not present between the center line C and the right frame bone 514. Further, the range in which the start points of the first vertical intermediate bones 61 to 66 are present is only up to a position where the distance from the left frame bone 513 becomes 9/20 of the distance Ls between the pair of vertical frame bones (i.e., the range up to a line C1 where the distance from the first reference line S1 becomes 0.45 Ls).

Angles θ1 to θ6 formed by the first vertical intermediate bones 61 to 66 and the upper frame bone 511 on the left frame bone 513 side are 90° or less. An angle θ14 formed by the reinforcing bone 91 and the horizontal intermediate bone 517 on the left frame bone 513 side is greater than θ13 and less than 90°.

The range in which start points of the second vertical intermediate bones 71 to 77 are present is only up to a position where the distance from the right frame bone 514 becomes 11/20 of the distance Ls between the pair of vertical frame bones (i.e., the range up to the line C1 where the distance from the second reference line S2 becomes 0.55 Ls).

The first vertical intermediate bones 61 to 66 all connect the upper frame bone 511 and the lower frame bone 512 to each other. The second vertical intermediate bones 71 to 77 connect the upper frame bone 511 and the lower frame bone 512 to each other. The reinforcing bone 91 connects the lower frame bone 512 and the horizontal intermediate bones 517 to each other.

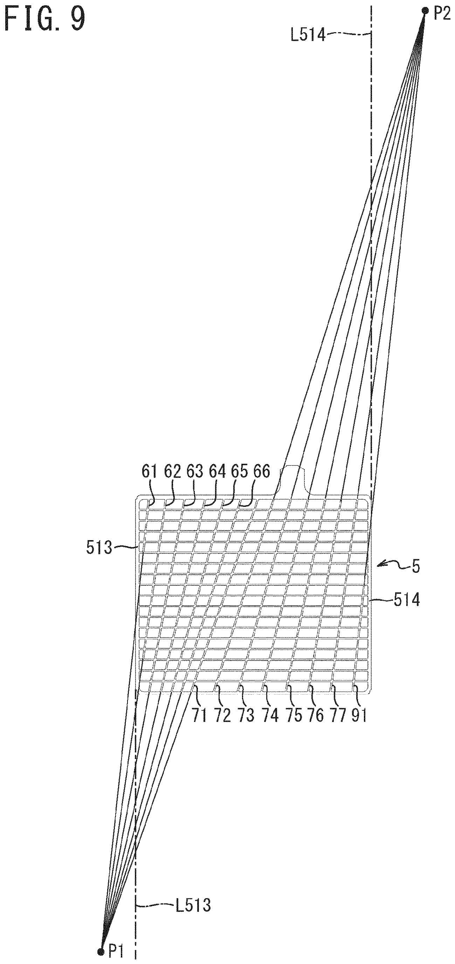

As illustrated in FIG. 9, lines extending the first vertical intermediate bones 63 to 66 downward below the lower frame bone 512 converge to a single point. This convergence point P1 is located outward of an extension line L513 of the left frame bone 513. Lines extending the second vertical intermediate bones 71 to 77 and the reinforcing bone 91 upward above the upper frame bone 511 converge to a single point. This convergence point P2 is located outward of an extension line L514 of the right frame bone 514.

<Fifth Embodiment>

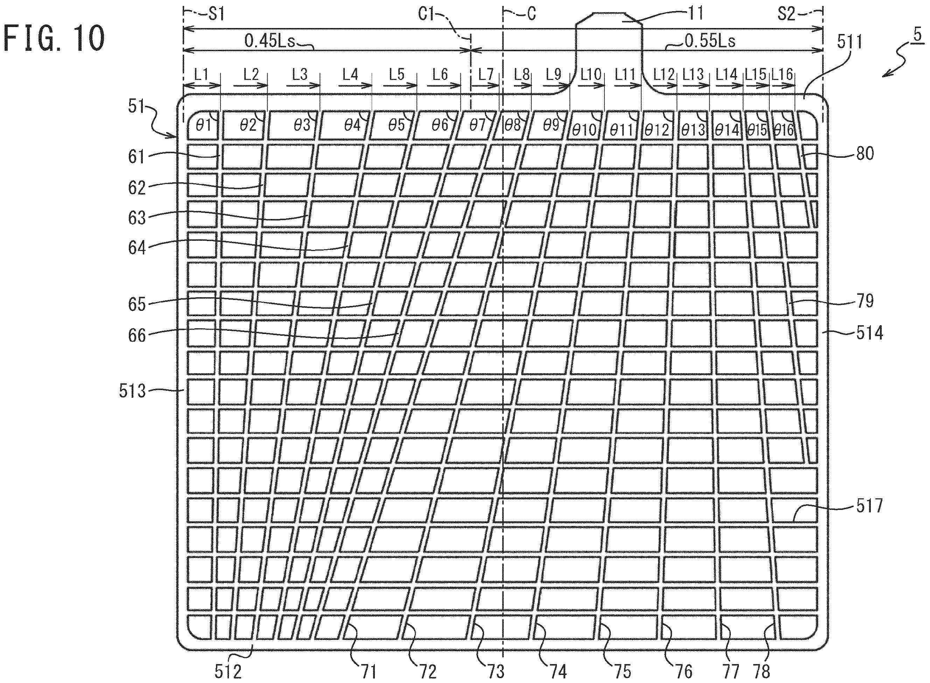

FIG. 10 illustrates a fifth embodiment of a positive electrode current collector forming a positive electrode plate 10. The positive electrode current collector of the fifth embodiment is different in design from the vertical intermediate bones of the positive electrode current collector of the first embodiment, but is the same other than that.

As illustrated in FIG. 10, in a positive electrode current collector 5 of the fifth embodiment, a plurality of intermediate bones is formed by first vertical intermediate bones 61 to 66 extending from the lower frame bone 512 side toward the upper frame bone 511 side while obliquely expanding from each other, and directly reaching the upper frame bone 511, second vertical intermediate bones 71 to 80 extending from the upper frame bone 511 toward the lower frame bone 512 side while obliquely expanding from each other, and 17 horizontal intermediate bones 517 connecting a left frame bone 513 and a right frame bone 514 to each other. The horizontal intermediate bones 517 extend parallel to the upper frame bone 511 and the lower frame bone 512.

The cross-sectional areas of the upper frame bone 511, the left frame bone 513, and the right frame bone 514 are greater than the cross-sectional areas of the first vertical intermediate bones 61 to 66, the second vertical intermediate bones 71 to 80, and the horizontal intermediate bones 517.

The vertical intermediate bones extending from the lower frame bone 512 side toward the upper frame bone 511 side while obliquely expanding from each other are only the first vertical intermediate bones 61 to 66, and all of them directly reach the upper frame bone 511.

Table 5 shows distances Ln of the first vertical intermediate bones 61 to 66 and the second vertical intermediate bones 71 to 80 from a first reference line (a line indicating the center position of the left frame bone 513 in its width direction) S1, ratios Ln/Ls of the distances Ln to a distance (a distance between the pair of vertical frame bones) Ls between the first reference line S1 and a second reference line (a line indicating the center position of the right frame bone 514 in its width direction) S2, and angles θn formed by the first vertical intermediate bones 61 to 66 and the second vertical intermediate bones 71 to 80, and the upper frame bone 511 on the left frame bone 513 side. The distance Ls is 135 mm.

[Table 5]

| n | Ln (mm) | Ln/Ls | θn (°) | State |
|---|---|---|---|---|
| 1 | 8 | 0.06 | 89 | Radially upward |
| 2 | 16 | 0.12 | 86 | |
| 3 | 25 | 0.18 | 82 | |
| 4 | 34 | 0.25 | 80 | |
| 5 | 43 | 0.31 | 77 | |
| 6 | 51 | 0.38 | 74 | |
| 7 | 60 | 0.44 | 73 | Radially downward |
| 8 | 69 | 0.51 | 76 | |
| 9 | 76 | 056 | 79 | |
| 10 | 83 | 0.61 | 82 | |
| 11 | 89 | 0.66 | 85 | |
| 12 | 95 | 0.70 | 88 | |
| 13 | 102 | 0.75 | 91 | |
| 14 | 110 | 0.81 | 94 | |
| 15 | 119 | 0.88 | 97 | |
| 16 | 128 | 0.94 | 100 | |

Start points of the first vertical intermediate bones 61 to 66 (connection points to the upper frame bone) are all present between the center (the center line C) between the pair of vertical frame bones (the left frame bone 513 and the right frame bone 514) and the left frame bone (the first vertical frame bone being the vertical frame bone on the side where a lug is not present) 513, and are not present between the center line C and the right frame bone 514. Further, the range in which the start points of the first vertical intermediate bones 61 to 66 are present is only up to a position where the distance from the left frame bone 513 becomes 9/20 of the distance Ls between the pair of vertical frame bones (i.e., the range up to a line C1 where the distance from the first reference line S1 becomes 0.45 Ls).

Angles $\theta 1$ to $\theta 6$ formed by the first vertical intermediate bones 61 to 66 and the upper frame bone 511 on the left frame bone 513 side are 90° or less.

The range in which start points of the second vertical intermediate bones 71 to 80 are present is only up to a position where the distance from the right frame bone 514 becomes 11/20 of the distance Ls between the pair of vertical frame bones (i.e., the range up to the line C1 where the distance from the second reference line S2 becomes 0.55 Ls).

The first vertical intermediate bones 61 to 66 all connect the upper frame bone 511 and the lower frame bone 512 to each other. The second vertical intermediate bones 71 to 78 connect the upper frame bone 511 and the lower frame bone 512 to each other, but the second vertical intermediate bones 79, 80 do not reach the lower frame bone 512 and connect the upper frame bone 511 and the horizontal intermediate bones 517 to each other.

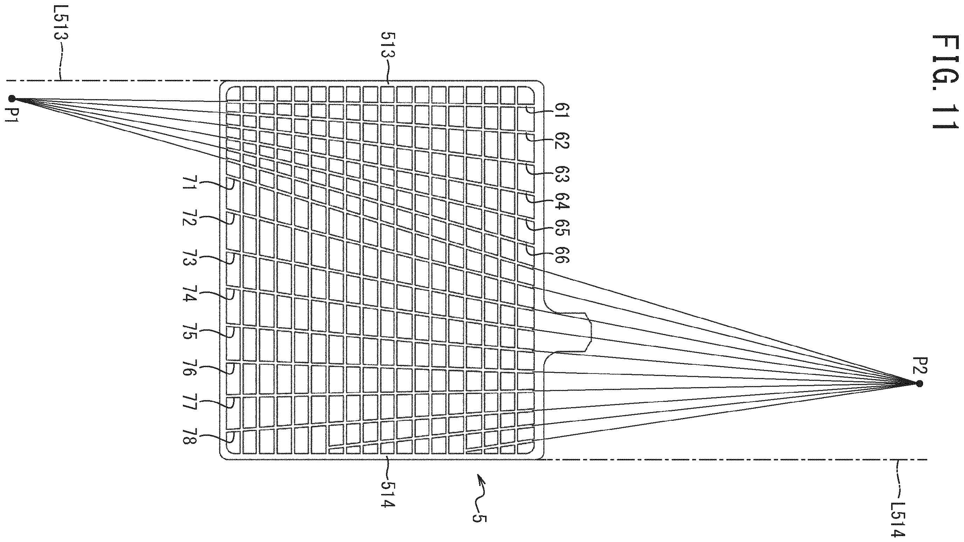

As illustrated in FIG. 11, lines extending the first vertical intermediate bones 61 to 66 downward below the lower frame bone 512 converge to a single point. This convergence point P1 is located inward of an extension line L513 of the left frame bone 513. Lines extending the second vertical intermediate bones 71 to 80 upward above the upper frame bone 511 converge to a single point. This convergence point P2 is located inward of an extension line L514 of the right frame bone 514.

<Comparative Example 1>

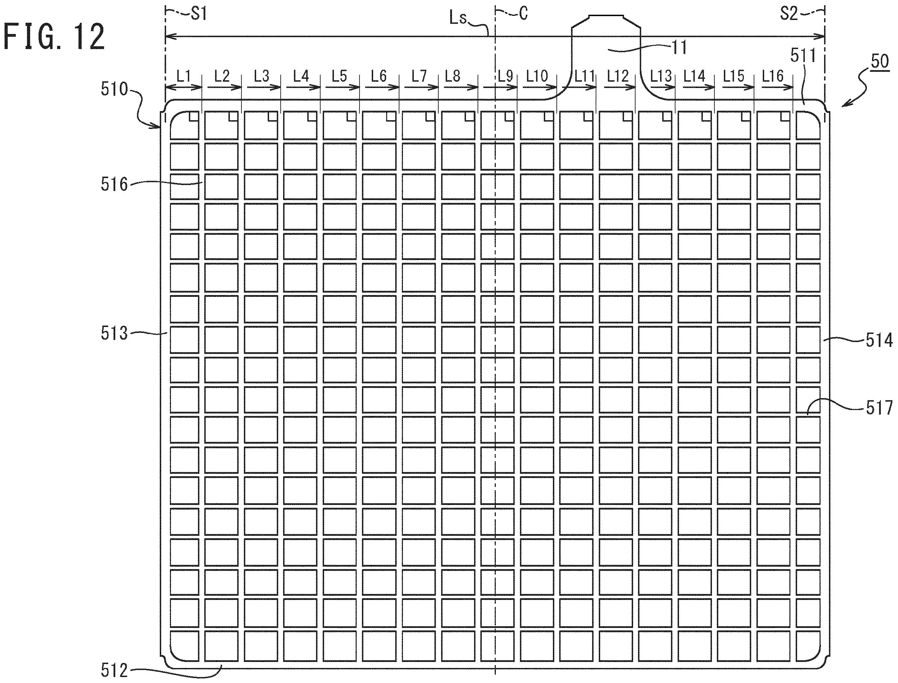

In a positive electrode current collector 50 of Comparative Example 1 illustrated in FIG. 12, a plurality of intermediate bones is formed by 16 vertical intermediate bones 516 connecting an upper frame bone 511 and a lower frame bone 512 to each other, and 17 horizontal intermediate bones 517 connecting a left frame bone 513 and a right frame bone 514 to each other. The vertical intermediate bones 516 extend parallel to the left frame bone 513 and the right frame bone 514. That is, in this example, the positive electrode current collector 50 does not include the first vertical intermediate bones extending from the lower frame bone 512 side toward the upper frame bone 511 side while obliquely expanding from each other, and directly reaching the upper frame bone 511, or the second vertical intermediate bones extending from the upper frame bone 511 toward the lower frame bone 512 side while obliquely expanding from each other. The horizontal intermediate bones 517 extend parallel to the upper frame bone 511 and the lower frame bone 512.

The cross-sectional areas of the upper frame bone 511, the left frame bone 513, and the right frame bone 514 are greater than the cross-sectional areas of the vertical intermediate bones 516, the horizontal intermediate bones 517, and a reinforcing bone 91.

Table 6 shows distances Ln of the 16 vertical intermediate bones 516 from a first reference line (a line indicating the center position of the left frame bone 513 in its width direction) S1, ratios Ln/Ls of the distances Ln to a distance (a distance between the pair of vertical frame bones) Ls between the first reference line S1 and a second reference line (a line indicating the center position of the right frame bone 514 in its width direction) S2, and angles $\theta n$ (all 90°) formed by the vertical intermediate bones 516 and the upper frame bone 511 on the left frame bone 513 side. The distance Ls is 135 mm.

[Table 6]

| n | Ln (mm) | Ln/Ls | $\theta n$ (°) | State |
|---|---|---|---|---|
| 1 | 8 | 0.06 | 90 | |
| 2 | 16 | 0.12 | 90 | |
| 3 | 24 | 0.18 | 90 | |
| 4 | 31 | 0.23 | 90 | |
| 5 | 40 | 0.30 | 90 | |
| 6 | 48 | 0.36 | 90 | |
| 7 | 56 | 0.41 | 90 | |
| 8 | 64 | 0.47 | 90 | No expansion |
| 9 | 72 | 0.53 | 90 | |
| 10 | 80 | 0.59 | 90 | |
| 11 | 88 | 0.65 | 90 | |
| 12 | 96 | 0.71 | 90 | |
| 13 | 104 | 077 | 90 | |
| 14 | 113 | 0.84 | 90 | |
| 15 | 121 | 0.90 | 90 | |
| 16 | 128 | 0.95 | 90 | |

<Comparative Example 2>

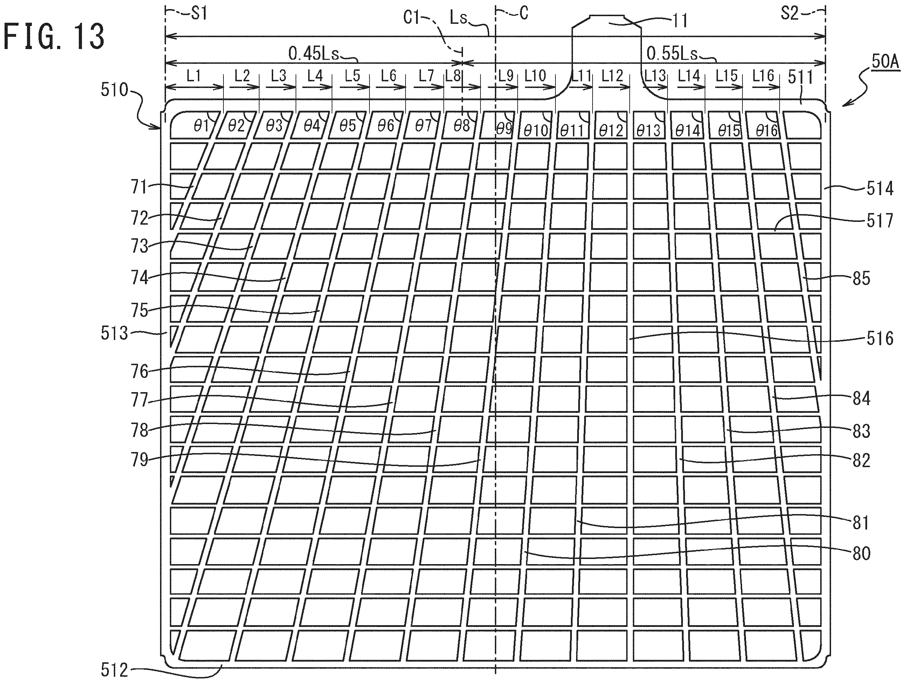

In a positive electrode current collector 50A of Comparative Example 2 illustrated in FIG. 13, a plurality of intermediate bones is formed by second vertical intermediate bones 71 to 85 extending from an upper frame bone 511 toward the lower frame bone 512 side while obliquely expanding from each other, a vertical intermediate bone 516 extending parallel to a left frame bone 513 and a right frame bone 514 and connecting the upper frame bone 511 and the lower frame bone 512 to each other, and 17 horizontal intermediate bones 517 connecting the left frame bone 513 and the right frame bone 514 to each other. That is, in this example, the positive electrode current collector 50A does not include the first vertical intermediate bones extending from the lower frame bone 512 side toward the upper frame bone 511 side while obliquely expanding from each other, and directly reaching the upper frame bone 511. The horizontal intermediate bones 517 extend parallel to the upper frame bone 511 and the lower frame bone 512.

The cross-sectional areas of the upper frame bone 511, the left frame bone 513, and the right frame bone 514 are greater than the cross-sectional areas of the vertical intermediate bone 516, the second vertical intermediate bones 71 to 85, and the horizontal intermediate bones 517.

Table 7 shows distances Ln of the second vertical intermediate bones 71 to 85 from a first reference line (a line indicating the center position of the left frame bone 513 in its width direction) S1, ratios Ln/Ls of the distances Ln to a distance (a distance between the pair of vertical frame bones) Ls between the first reference line S1 and a second reference line (a line indicating the center position of the right frame bone 514 in its width direction) S2, and angles $\theta n$ formed by the second vertical intermediate bones 71 to 85 and the upper frame bone 511 on the left frame bone 513 side. The distance Ls is 135 mm.

[Table 7]

| n | Ln (mm) | Ln/Ls | θn (°) | State |
|---|---------|-------|--------|-------|
| 1 | 13 | 0.10 | 68 | |
| 2 | 20 | 0.15 | 70 | |
| 3 | 27 | 0.20 | 72 | |
| 4 | 35 | 0.26 | 74 | |
| 5 | 42 | 0.31 | 76 | |
| 6 | 50 | 0.37 | 78 | |
| 7 | 57 | 0.42 | 80 | |
| 8 | 65 | 0.48 | 82 | |
| 9 | 72 | 0.53 | 84 | Radially downward |
| 10 | 80 | 0.59 | 86 | |
| 11 | 87 | 0.64 | 88 | |
| 12 | 95 | 070 | 90 | |
| 13 | 103 | 0.76 | 88 | |
| 14 | 110 | 0.81 | 86 | |
| 15 | 118 | 0.87 | 84 | |
| 16 | 125 | 0.93 | 82 | |

Start points of the second vertical intermediate bones 71 to 86 (connection points to the upper frame bone) are also present outward of a position where the distance from the right frame bone 514 becomes 11/20 of the distance Ls between the pair of vertical frame bones (i.e., a line C1 where the distance from the second reference line S2 becomes 0.55 Ls) .

Angles θ1 to θ11, θ13 to θ16 formed by the second vertical intermediate bones 71 to 85 and the upper frame bone 511 on the left frame bone 513 side are less than 90°.

The second vertical intermediate bones 74 to 84 connect the upper frame bone 511 and the lower frame bone 512 to each other, the second vertical intermediate bones 71 to 73 connect the upper frame bone 511 and the left frame bone 513 to each other, and the second vertical intermediate bone 85 connects the upper frame bone 511 and the right frame bone 514 to each other.

Lines extending the second vertical intermediate bones 71 to 85 and the vertical intermediate bone 516 upward above the upper frame bone 511 converge to a single point on the extension line of the vertical intermediate bone 516. That is, this convergence point is located between an extension line of the left frame bone 513 and an extension line of the right frame bone 514 (right above a lug 11).

<Comparative Example 3>

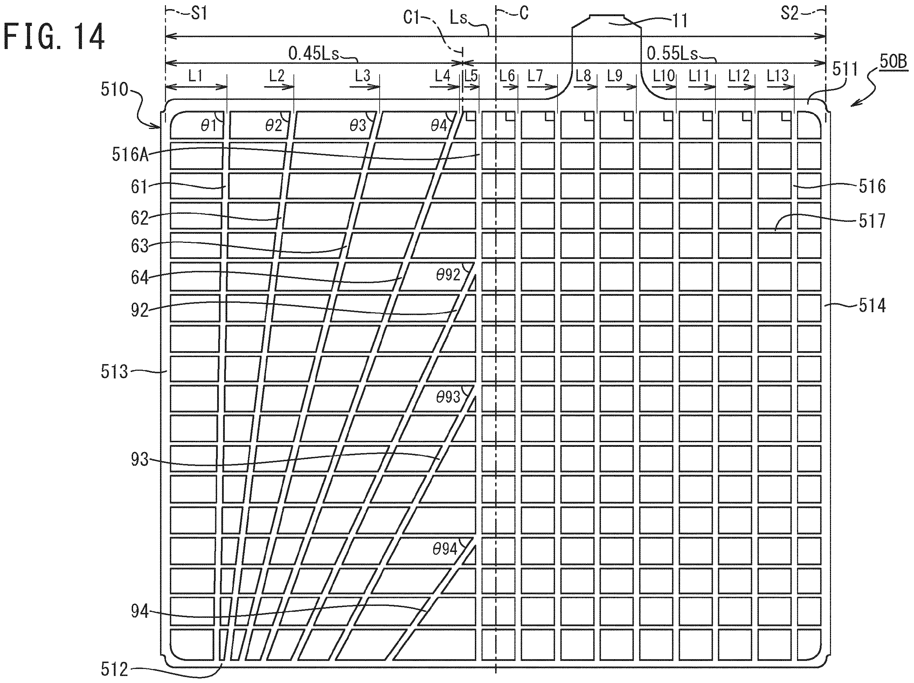

In a positive electrode current collector 50B illustrated in FIG. 14, a plurality of intermediate bones is formed by first vertical intermediate bones 61 to 64 extending from the lower frame bone 512 side toward the upper frame bone 511 side while obliquely expanding from each other, and directly reaching the upper frame bone 511, 9 vertical intermediate bones 516 extending parallel to a left frame bone 513 and a right frame bone 514 and connecting the upper frame bone 511 and the lower frame bone 512 to each other, reinforcing bones 92 to 94 extending from the lower frame bone 512 side toward the upper frame bone 511 side while obliquely expanding from each other, and reaching the vertical intermediate bone 516A closest to the left frame bone 513, and 17 horizontal intermediate bones 517 connecting the left frame bone 513 and the right frame bone 514 to each other. The horizontal intermediate bones 517 extend parallel to the upper frame bone 511 and the lower frame bone 512.

That is, in this example, the positive electrode current collector 50B does not include the second vertical intermediate bones extending from the upper frame bone 511 toward the lower frame bone 512 side while obliquely expanding from each other. As the vertical intermediate bones extending from the lower frame bone 512 side toward the upper frame bone 511 side while obliquely expanding from each other, there are included the reinforcing bones 92 to 94 not directly reaching the upper frame bone 511 and reaching the vertical intermediate bone 516A, in addition to the first vertical intermediate bones 61 to 64 directly reaching the upper frame bone 511.

The cross-sectional areas of the upper frame bone 511, the left frame bone 513, and the right frame bone 514 are greater than the cross-sectional areas of the 9 vertical intermediate bones 516, the first vertical intermediate bones 61 to 64, the reinforcing bones 92 to 94, and the horizontal intermediate bones 517.

Table 8 shows distances Ln of the first vertical intermediate bones 61 to 64 and the vertical intermediate bones 516 from a first reference line (a line indicating the center position of the left frame bone 513 in its width direction) S1, ratios Ln/Ls of the distances Ln to a distance (a distance between the pair of vertical frame bones) Ls between the first reference line S1 and a second reference line (a line indicating the center position of the right frame bone 514 in its width direction) S2, and angles θn formed by the first vertical intermediate bones 61 to 64 and the vertical intermediate bones 516, and the upper frame bone 511 on the left frame bone 513 side (the angles formed by the vertical intermediate bones 516 and the upper frame bone 511 are all 90°). The distance Ls is 135 mm.

[Table 8]

| n | Ln (mm) | Ln/Ls | θn (°) | State |
|---|---|---|---|---|
| 1 | 13 | 0.10 | 88 | |
| 2 | 16 | 0.12 | 83 | |
| 3 | 44 | 0.33 | 76 | |
| 4 | 60 | 0.44 | 70 | Radially upward |
| 92 | - | - | 65 | |
| 93 | - | - | 62 | |
| 94 | - | - | 54 | |
| 5 | 64 | 0.47 | 90 | |
| 6 | 72 | 0.53 | 90 | |
| 7 | 80 | 0.59 | 90 | |
| 8 | 88 | 0.65 | 90 | |
| 9 | 96 | 0.71 | 90 | No expansion |
| 10 | 104 | 0.77 | 90 | |
| 11 | 113 | 0.84 | 90 | |
| 12 | 121 | 0.90 | 90 | |
| 13 | 129 | 0.96 | 90 | |

Start points of the first vertical intermediate bones 61 to 64 (connection points to the upper frame bone) are all present between the center (the center line C) between the pair of vertical frame bones (the left frame bone 513 and the right frame bone 514) and the left frame bone (the first vertical frame bone being the vertical frame bone on the side where a lug is not present) 513, and are not present between the center line C and the right frame bone 514. Further, the range in which the start points of the first vertical intermediate bones 61 to 64 are present is only up to a position where the distance from the left frame bone 513 becomes 9/20 of the distance Ls between the pair of vertical frame bones (i.e., the range up to a line C1 where the distance from the first reference line S1 becomes 0.45 Ls).

Angles θ1 to θ4 formed by the first vertical intermediate bones 61 to 64 and the upper frame bone 511 on the left frame bone 513 side are less than 90°. Angles θ92 to θ94 formed by the reinforcing bones 92 to 94 and the horizontal intermediate bones 517 on the left frame bone 513 side are less than 90° and smaller than θ4.

[Actions and Effects exhibited by Liquid Lead Storage Batteries of Embodiments]

The positive electrode current collectors of the first to fifth embodiments satisfy all of the following (a) to (d).

(a) At least part of the plurality of vertical intermediate bones present in the range between the center between the pair of vertical frame bones and the first vertical frame bone being the vertical frame bone on the side where the lug is not present, are the first vertical intermediate bones extending from the lower frame bone side toward the upper frame bone side while obliquely expanding from each other, and directly reaching the upper frame bone.

(b) The vertical intermediate bones extending from the lower frame bone side toward the upper frame bone side while obliquely expanding from each other all directly reach the upper frame bone.

(c) The angles formed by the first vertical intermediate bones and the upper frame bone on the first vertical frame bone side are less than 90°. That is, the first vertical intermediate bones expand in the direction approaching the lug.

(d) The connection points of the first vertical intermediate bones to the upper frame bone are present only in the range between the center between the pair of vertical frame bones and the first vertical frame bone being the vertical frame bone on the side where the lug is not present.

The positive electrode current collector of Comparative Example 1 does not satisfy any of the above (a) to (d). The positive electrode current collector of Comparative Example 2 does not satisfy any of the above (a) to (d). Comparative Example 2 is the liquid lead storage battery described in PTL 1, and the positive electrode grid is formed in a shape in which all the vertical intermediate bones extend in such a way that the distances therebetween in the left-right direction increase as away from the lug. With the positive electrode current collector of Comparative Example 2, the potential distribution in the plane becomes better than the positive electrode current collector of Comparative Example 1, but since the area of an opening increases as away from the lug, when vibration or impact is applied in on-board use or the like, the discharge capacity corresponding to a fallen portion of the active material is reduced, and therefore the life decreases.

The positive electrode current collector of Comparative Example 3 does not satisfy the above (b). The positive electrode current collector of Comparative Example 3 is the grid described in PTL 2. In the liquid lead storage battery with this grid, when extracting a large current for use in the engine start or the like, as described above, a large current is concentrated on the vertical intermediate bone 516A so that corrosion progresses, and therefore, there is a possibility that the performance of the battery decreases rapidly.

On the other hand, the positive electrode current collectors of the first to fifth embodiments satisfy all of the above (a) to (d), and therefore the potential distributions of the positive electrode grids become good so that the stable performance can be obtained even in use where extraction current is high.

When the above (c) is not satisfied (e.g., when a convergence point is located far rightward of the convergence point P1 in FIG. 7), since the first vertical intermediate bones expand in the direction away from the lug 11, the potential distribution is hard to improve. The angles formed by the first vertical intermediate bones and the upper frame bone on the first vertical frame bone side are preferably 45° or more and less than 90° and more preferably 70° or more and less than 90°.

Further, the range in which the start points of the first vertical intermediate bones are present is only up to the position where the distance from the left frame bone 513 becomes 9/20 of the distance Ls between the pair of vertical frame bones (i.e., satisfying the above (d)), and the range in which the start points of the second vertical intermediate bones (the connection points to the upper frame bone) are present is only up to the position where the distance from the right frame bone 514 becomes 11/20 of the distance Ls between the pair of vertical frame bones. Consequently, the openings formed by the vertical intermediate bones, the frame bone, and the horizontal intermediate bones, that are created on the sides where the first vertical intermediate bones and the second vertical intermediate bones expand, have appropriate sizes in the usual placement density, and therefore the inconvenience following the installation of a reinforcing bone, or the like does not occur. When these openings are made larger, it is necessary to provide a reinforcing bone, and therefore a mold in the manufacture is complicated, leading to an increase in the weight of the positive electrode current collector.

The start points of the first vertical intermediate bones are preferably present in the range from a position where the distance from the left frame bone 513 becomes 1/5 or more of the distance Ls between the pair of vertical frame bones, to a position where the distance from the left frame bone 513 becomes 1/2 or less of the distance Ls the pair of vertical frame bones.

The lines have the convergence points P1, P2, i.e., the lines extending the first vertical intermediate bones downward below the lower frame bone 512 converge to the single point, and the lines extending the second vertical intermediate bones upward above the upper frame bone 511 converge to the single point. Therefore, the potential distribution becomes better than the case where no convergence occurs. Further, since design change is easy, it is also possible to easily cope with the development of products in many types.

Further, in the case where the rectangular shape forming the frame bone of the positive electrode current collector is the horizontally long shape in which "the horizontal side is longer than the vertical side", the growth in the horizontal direction tends to increase in the grid-like substrate of the positive electrode current collector. Then, when the growth in the horizontal direction progresses, there are cases where the left and right frame bones of the expanding positive electrode plate stretch and tear off the contacting separators. Even when the separators are not torn off, there are cases where part of the positive electrode grid broken by corrosion break through the separators. As a result, there are cases where the positive electrode and the negative electrode stacked with each other via the separator therebetween contact each other to cause a short-circuit, resulting in reaching the life early.

In the positive electrode current collectors of the first to fifth embodiments, the grid-like substrates of the positive electrode current collectors have the horizontally long shape, but, by satisfying all of the above (a) to (d), it is possible to obtain the significant potential distribution improvement effect and thus to prevent reaching the early life.

In comparison with Comparative Example 3, among the bones extending from the lower frame bone toward the upper frame bone while obliquely expanding from each other, the number of the first vertical intermediate bones directly connected to the upper frame bone is greater in the positive electrode current collectors 5 of the first to fourth embodiments than in the positive electrode current collector 50B of Comparative Example 3, and therefore the amount of current collected toward the upper frame bone with the large cross-sectional area is made greater so that corrosion is unlikely to occur in the vertical intermediate bones.

The first vertical intermediate bone 61 forming the positive electrode current collector of the first embodiment and the first vertical intermediate bones 61, 62 forming the positive electrode current collectors of the second embodiment and the third embodiment do not reach the lower frame bone 512. However, it is preferable that the first vertical intermediate bones all reach the lower frame bone 512, or that even when not reaching the lower frame bone 512, all of them reach positions 0.90 times or more the distance between the upper frame bone 511 and the lower frame bone 512. Consequently, the effect to improve the potential distribution in the entire plane of the positive electrode current collector is enhanced.

The differences of the actions and effects due to the differences in the design of the vertical intermediate bones in the positive electrode current collectors of the first to fifth embodiments are as follows:
In the lead storage battery using the positive electrode current collector of the first embodiment or the second embodiment, since the second vertical intermediate bones converge toward above the lug, the current collection characteristics and the cycle life characteristics better than those of the third embodiment and the fourth embodiment can be obtained.

In comparison between the first embodiment and the second embodiment, the range in which the start points of the first vertical intermediate bones are present is only up to the position where the distance from the left frame bone 513 becomes 7/20 of the distance Ls between the pair of vertical frame bones in the first embodiment, which is narrower than that in the second embodiment, and the range in which the start points of the second vertical intermediate bones are present is only up to the position where the distance from the right frame bone 514 becomes 13/20 of the distance Ls between the pair of vertical frame bones in the first embodiment, which is wider than that in the second embodiment. Therefore, in the usual placement density, the openings formed by the vertical intermediate bones, the frame bone, and the horizontal intermediate bones, that are created on the sides where the first vertical intermediate bones and the second vertical intermediate bones expand, have more appropriate sizes in the first embodiment than in the second embodiment, and therefore the first embodiment has a further advantage in that the inconvenience following the installation of a reinforcing bone, or the like does not occur.

In the lead storage battery using the positive electrode current collector of the third embodiment, since the average opening area of the openings formed by the first vertical intermediate bones is smaller than those in the other embodiments, the positive electrode mixture held in the openings is likely to be prevented from peeling off or falling off, but, in comparison with the first embodiment and the second embodiment, the average opening area of the openings near the lug is made large, and therefore the third embodiment is slightly inferior to the first embodiment and the second embodiment in the current collection characteristics and the cycle life characteristics.

In the lead storage battery using the positive electrode current collector of the fourth embodiment, since variation in the opening area of the openings is made small compared to the first to third embodiments, local peeling-off or falling-off of the positive electrode mixture is likely to be prevented, but the fourth embodiment is slightly inferior to the first to third embodiments in the cycle life characteristics for stop-start vehicles.

In the lead storage battery using the positive electrode current collector of the fifth embodiment, like in the first embodiment and the second embodiment, the second vertical intermediate bones converge toward above the lug, and therefore the current collection characteristics and the cycle life characteristics better than those of the third embodiment and the fourth embodiment can be obtained. Further, in the lead storage battery using the positive electrode current collector of the fifth embodiment, like in the third embodiment, the average opening area of the openings formed by the first vertical intermediate bones is smaller than those in the other embodiments, and therefore the positive electrode mixture held in the openings is likely to be prevented from peeling off or falling off.

[Preferred Mode 1]

In the positive electrode current collectors of the first to fifth embodiments, the cross-sectional area of the upper frame bone 511 is preferably 235% to 300% of the average cross-sectional area of the horizontal intermediate bones 517, and the opening area in plan view of each of the plurality of openings contacting the upper frame bone 511 is preferably 50% to 75% of the average opening area of all the openings of the grid-like substrate 51.

[Preferred Mode 2]

In the positive electrode current collectors of the first to fifth embodiments, when the positive electrode mixture is porous, the average diameter of pores in the positive electrode mixture is preferably 0.15 um or more and 0.40 um or less, and the porosity of the positive electrode mixture is preferably 30% or more and 50% or less.

When the pore diameter of the positive electrode mixture is less than 0.15 um, there is a possibility that the utilization rate of the positive electrode active material decreases. On the other hand, when the average pore diameter of the positive electrode mixture is greater than 0.40 um, there is a possibility that the internal resistance of the liquid lead storage battery increases. Further, there is a possibility that softening of the positive electrode mixture tends to occur. A method for measuring the average diameter of pores in the positive electrode mixture is not particularly limited, and, for example, it can be measured by a mercury intrusion method.

When the porosity of the positive electrode mixture is less than 30%, there is a possibility that sulfuric acid is hard to permeate into the mixture to cause a decrease in the utilization rate of the active material. On the other hand, when the porosity of the positive electrode mixture is greater than 50%, there is a possibility that the density of the mixture decreases to cause a decrease in cycle life.

[Preferred Mode 3]

In the positive electrode current collector of the first embodiment, the cross-sectional areas of the second vertical intermediate bones 74 to 76 and the vertical intermediate bone 516 connected to a lower portion of the lug 11 are preferably 1.26 times or more and 1.50 times or less the cross-sectional area of all the vertical intermediate bones.

Examples

The preferred modes 1 to 3 will be described more specifically by showing Examples and Comparative Examples below.

[Comparative Test for Preferred Mode 1]

Liquid lead storage batteries with a battery size of Q-85 (sample No. 1 to No. 25) were produced by the following method. As shown in Table 1, the liquid lead storage batteries of sample No. 1 to No. 25 differ from each other in configurations of an upper frame bone of a positive electrode current collector and openings contacting the upper frame bone, but are the same other than that. To explain with reference to FIG. 2, the liquid lead storage batteries of sample No. 1 to No. 25 are configured such that, in the positive electrode current collector 5, the width (the horizontal dimension) of the grid-like substrate 51 is 135 mm, and the height (the vertical dimension) thereof is 114.5 mm. These dimensions are each a distance between the center lines of the frame bones. The cross-sectional areas of the left frame bone 513, the right frame bone 514, and the lower frame bone 512 are each 1.80 mm$^2$.

First, current collectors (a grid-like substrate and a lug for each) for positive electrode plates and negative electrode plates were produced by a punching method from a rolled plate made of a Pb-Ca-Sn alloy. In a cross section of the current collector taken along its thickness direction, rolled texture with an average interlayer distance of 20 um was observed.

The weight of each of the positive electrode current collectors is 40.0 g. When variously changing the vertical width ratio of the upper frame bone 511, the vertical widths of the intermediate bones were changed simultaneously so as to make the weights of the positive electrode current collectors equal to each other among all the samples.

The positive electrode current collectors of the liquid lead storage batteries of sample No. 1 to No. 5 are configured such that the vertical widths of all the horizontal intermediate bones 517 are equal to each other in the positive electrode current collector 5 of FIG. 2. In the positive electrode current collectors of sample No. 1 to No. 5, the average cross-sectional areas of all the horizontal intermediate bones 517 are 1.00 mm$^2$, and the average cross-sectional areas of the upper frame bones 511 are 2.00 mm$^2$. The opening areas in plan view of the openings contacting the upper frame bones 511 are respectively 45%, 50%, 65%, 75%, and 80% of the average opening areas of all the openings in plan view. The average opening area of the openings contacting the upper frame bone 511 was adjusted by changing the separation distances between the horizontal intermediate bones 517. In this event, the separation distances between the horizontal intermediate bones 517 were adjusted to be equal to each other.

In the positive electrode current collectors 5 included in the liquid lead storage batteries of sample No. 6 to No. 10, the cross-sectional area of the upper frame bone 511 forming the grid-like substrate 51 is 2.23 mm$^2$, and the cross-sectional areas of all the horizontal intermediate bones 517 are 0.95 mm$^2$. That is, the vertical width ratio of the upper frame bone 511 to the horizontal intermediate bone 517 is 235%. The average opening areas in plan view of the openings contacting the upper frame bones 511 are respectively 45%, 50%, 65%, 75%, and 80% of the average opening areas of all the openings in plan view. The average opening area of the openings contacting the upper frame bone 511 was adjusted by changing the separation distances between the horizontal intermediate bones 517. In this event, the separation distances between the horizontal intermediate bones 517 were adjusted to be equal to each other.

In the positive electrode current collectors 5 included in the liquid lead storage batteries of sample No. 11 to No. 15, the cross-sectional area of the upper frame bone 511 forming the grid-like substrate 51 is 2.43 mm$^2$, and the cross-sectional areas of all the horizontal intermediate bones 517 are 0.90 mm$^2$. That is, the vertical width ratio of the upper frame bone 511 to the horizontal intermediate bone 517 is 270%. The average opening areas in plan view of the openings contacting the upper frame bones 511 are respectively 45%, 50%, 65%, 75%, and 80% of the average opening areas of all the openings in plan view. The average opening area of the openings contacting the upper frame bone 511 was adjusted by changing the separation distances between the horizontal intermediate bones 517. In this event, the separation distances between the horizontal intermediate bones 517 were adjusted to be equal to each other.

In the positive electrode current collectors 5 included in the liquid lead storage batteries of sample No. 16 to No. 20, the cross-sectional area of the upper frame bone 511 forming the grid-like substrate 51 is 2.55 mm$^2$, and the cross-sectional areas of all the horizontal intermediate bones 517 are 0.85 mm$^2$. That is, the vertical width ratio of the upper frame bone 511 to the horizontal intermediate bone 517 is 300%. The average opening areas in plan view of the openings contacting the upper frame bones 511 are respectively 45%, 50%, 65%, 75%, and 80% of the average opening areas of all the openings in plan view. The average opening area of the openings contacting the upper frame bone 511 was adjusted by changing the separation distances between the horizontal intermediate bones 517. In this event, the separation distances between the horizontal intermediate bones 517 were adjusted to be equal to each other.

In the positive electrode current collectors 5 included in the liquid lead storage batteries of sample No. 21 to No. 25, the cross-sectional area of the upper frame bone 511 forming the grid-like substrate 51 is 2.56 mm$^2$, and the cross-sectional areas of all the horizontal intermediate bones 517 are 0.80 mm$^2$. That is, the vertical width ratio of the upper frame bone 511 to the horizontal intermediate bone 517 is 320%. The average opening areas in plan view of the openings contacting the upper frame bones 511 are respectively 45%, 50%, 65%, 75%, and 80% of the average opening areas of all the openings in plan view. The average opening area of the openings contacting the upper frame bone 511 was adjusted by changing the separation distances between the horizontal intermediate bones 517. In this event, the separation distances between the horizontal intermediate bones 517 were adjusted to be equal to each other.

In the positive electrode current collectors 5 of sample No. 1 to No. 25, the configuration of the plurality of intermediate bones forming the grid-like substrate 51 is the same as that in the positive electrode current collector 5 of the first embodiment illustrated in FIG. 2.

As negative electrode current collectors of sample No. 1 to No. 25, ones having the same shapes and the same cross-sectional areas as those of the positive electrode current collector 5 of sample No. 1 were used.

Next, lead powder mainly composed of lead monoxide was kneaded with water and dilute sulfuric acid and further kneaded as needed by adding additives, thereby producing a paste for positive electrode mixture. The ratio $\alpha/(\alpha+\beta)$ between a mass $\alpha$ of $\alpha$-lead dioxide and a mass $\beta$ of $\beta$-lead dioxide contained in a positive electrode active material after formation was set to 20%. Further, lead powder mainly composed of lead monoxide was kneaded with water and dilute sulfuric acid and further kneaded as needed by adding additives, thereby producing a paste for negative electrode mixture.

Then, after the grid-like substrates of the positive electrode current collectors were filled with the paste for positive electrode mixture, maturation and drying were performed to produce positive electrode plates before formation. Likewise, after the grid-like substrates of the negative electrode current collectors were filled with the paste for negative electrode mixture, maturation and drying were performed to produce negative electrode plates before formation.

The density of the positive electrode mixture included in the positive electrode plates was 4.2 g/cm3, and the density of the negative electrode mixture included in the negative electrode plates was 4.0 g/cm$^3$. The average pore diameter of the positive electrode mixture was 0.20 um, and the porosity thereof was 40%.

As a separator, there was prepared a ribbed separator made of a porous synthetic resin and having a flat-plate base surface and a fold-like rib protruding in a direction perpendicular to the plane direction of the base surface. The total thickness of the ribbed separator was set to 0.90 mm, the height of the rib was set to 0.65 mm, and the thickness of the base surface was set to 0.25 mm.

The pluralities of produced positive electrode plates and negative electrode plates before formation were alternately stacked with the ribbed separators interposed therebetween, thereby producing an electrode plate group. The number of the positive electrode plates was set to seven, and the number of the negative electrode plates was set to eight.

The electrode plate group was housed in a battery case. The lugs of the positive electrode current collectors of the positive electrode plates were joined together by a positive electrode strap, and the lugs of the negative electrode current collectors of the negative electrode plates were joined together by a negative electrode strap. Then, the positive electrode strap was connected to one end of a positive electrode terminal, and the negative electrode strap was connected to one end of a negative electrode terminal. The battery case included a plurality of cell chambers each housing the electrode plate group, and the volume of each cell chamber was 570 cm$^3$ at its portion not higher than an upper level (highest liquid level line). A predetermined group pressure was applied to the electrode plate groups.

Further, an opening of the battery case was closed with a lid. A positive electrode pole and a negative electrode pole were made to respectively pass through bushings insert-molded to the lid, and welding was performed in a state where the other end of the positive electrode pole and the other end of the negative electrode pole were exposed to the outside of the liquid lead storage battery, thereby producing the positive electrode terminal and the negative electrode terminal. An electrolytic solution composed of dilute sulfuric acid with a specific gravity of 1.23 and containing aluminum sulfate in a concentration of 0.1 mol/L was injected to the upper level of the battery case through a liquid injection port formed in the lid, then the liquid injection port was sealed with a plug, and then battery case formation was performed, thereby obtaining the liquid lead storage battery.

The time from the injection of the electrolytic solution until the start of energization for the formation (i.e., the soaking time) was set to 30 minutes, the amount of electricity for the formation was set to 230%, and the temperature of the electrolytic solution in the formation was set to 45°C. In this event, the amount of the injected electrolytic solution was 375cm$^3$ for each cell chamber. The specific gravity of the electrolytic solution after the formation was 1.28.

For later breakdown studies, a plurality of liquid lead storage batteries was produced for each lot and regarded to have the same structure and the same battery characteristics when they belonged to the same lot.

With respect to the liquid lead storage batteries of sample No. 1 to No. 25 thus obtained, a life test was performed at 75°C to examine the number of cycles up to life.

Conditions of the life test were as follows. First, in a 75°C environment, 300A discharge for 2 seconds, CCCV charge (14.5 V, maximum charging current 50 A) for 60 minutes, 25A discharge for 5 minutes, and CCCV charge (14.5 V, maximum charging current 50 A) for 30 minutes were performed in this order as one cycle, and the plurality of cycles was repeated, and when the voltage in each discharge was reduced to 7.2 V, it was determined that the life was reached, and the number of cycles performed up to then was determined as a life.

Based on the results of the life test, a total evaluation was made using the following criteria. When the number of cycles was 360 or more and less than 370, "O" was given. When the number of cycles was 370 or more, "◎" was given by determining that it was particularly excellent.

Further, as reference data, the growth rate $R_Y$ of the positive electrode grid in the vertical direction was confirmed when the life test reached 300 cycles. The growth rate $R_Y$ of the positive electrode grid was calculated as follows.

First, with respect to the positive electrode grid before the life test, a distance $Y_1$ from the top surface of the lid to the upper frame bone was measured in advance. This measurement may be performed via the liquid injection port formed in the lid, or a communication port may be formed in a proper position and the measurement may be performed via the communication port.

Then, the test was temporarily stopped when the life test reached 300 cycles, and a distance $Y_2$ from the top surface of the lid to the upper frame bone was measured.

Then, a difference between $Y_1$ and $Y_2$ was obtained, and based on the height (the vertical dimension) 114.5 mm of the grid-like substrate 51 and the following formula (1), the growth rate $R_Y$ (%) of the positive electrode grid in the vertical direction was calculated.

[Math. 1]

$$R_Y = \frac{Y_1 - Y_2}{114.5} \quad \ldots\ldots \quad (1)$$

The above results are collectively shown in Table 9.

[Table 9]

| No. | Cross-sectional area ratio (upper frame bone/horizontal intermediate bone average) (%) | Opening area ratio (%) | Growth rate RY (%) | Cycle life | Total determination |
|---|---|---|---|---|---|
| 1 | 200 | 45 | 100 | 360 | ○ |
| 2 | 200 | 50 | 101 | 365 | ○ |
| 3 | 200 | 65 | 103 | 369 | ○ |
| 4 | 200 | 75 | 105 | 367 | ○ |
| 5 | 200 | 80 | 108 | 361 | ○ |
| 6 | 235 | 45 | 95 | 365 | ○ |

(continued)

| No. | Cross-sectional area ratio (upper frame bone/horizontal intermediate bone average) (%) | Opening area ratio (%) | Growth rate RY (%) | Cycle life | Total determination |
|---|---|---|---|---|---|
| 7 | 235 | 50 | 97 | 373 | ◎ |
| 8 | 235 | 65 | 98 | 383 | ◎ |
| 9 | 235 | 75 | 99 | 377 | ◎ |
| 10 | 235 | 80 | 105 | 367 | ○ |
| 11 | 270 | 45 | 90 | 365 | ○ |
| 12 | 270 | 50 | 92 | 381 | ◎ |
| 13 | 270 | 65 | 94 | 388 | ◎ |
| 14 | 270 | 75 | 97 | 382 | ◎ |
| 15 | 270 | 80 | 103 | 364 | ○ |
| 16 | 300 | 45 | 86 | 363 | ○ |
| 17 | 300 | 50 | 87 | 370 | ◎ |
| 18 | 300 | 65 | 89 | 380 | ◎ |
| 19 | 300 | 75 | 92 | 375 | ◎ |
| 20 | 300 | 80 | 98 | 360 | ○ |
| 21 | 320 | 45 | 80 | 362 | ○ |
| 22 | 320 | 50 | 81 | 367 | ○ |
| 23 | 320 | 65 | 84 | 368 | ○ |
| 24 | 320 | 75 | 86 | 364 | ○ |
| 25 | 320 | 80 | 90 | 360 | ○ |

From the test results of sample No. 7 to No. 9, No. 12 to No. 14, and No. 17 to No. 19 in Table 9, it is seen that there is a tendency that the liquid lead storage battery having a particularly excellent life cycle can be obtained when the cross-sectional area of the upper frame bone 511 is 235% to 300% of the average cross-sectional area of the horizontal intermediate bones 517, and the opening area in plan view of each of the plurality of openings contacting the upper frame bone 511 is 50% to 75% of the average opening area of all the openings of the grid-like substrate 51.

When the cross-sectional area of the upper frame bone 511 is 235% or more of the average cross-sectional area of the horizontal intermediate bones 517, there is a tendency that the growth rate $R_Y$ in the vertical direction is suppressed and that the cycle life is improved. However, it is seen that when the ratio in cross-sectional area of the upper frame bone to the horizontal intermediate bone is greater than 300%, a tendency is shown that while the growth rate $R_Y$ in the vertical direction is further suppressed, the cycle life is not improved.

As a result of breakdown studies on the samples after the life test, it has been found that, in No. 21 to No. 25, the lower portions of the left and right frame bones of the positive electrode grid were both largely deformed outward and the positive electrode mixture in the peripheral openings fell off. From this, the relationship between the cross-sectional area ratio of the upper frame bone and the cycle life performance is considered as follows. First, as the cross-sectional area ratio of the upper frame bone increases, the mechanical strength of the upper frame bone increases, and therefore the growth in the upward direction is suppressed. On the other hand, increasing the cross-sectional area of the upper frame bone under the condition that the weight of the positive electrode current collector is constant leads to making the cross-sectional areas of the other intermediate bones relatively smaller. That is, it is conjectured that, in sample No. 21 to No. 25, the mechanical strength of the intermediate bones of the positive electrode current collector was so small as not to be able to prevent the deformation of the lower portions of the positive electrode current collector to cause the peeling-off or falling-off of the positive electrode mixture, leading to the reduction in the capacity of the liquid lead storage battery.

[Comparative Test for Preferred Mode 2]

Liquid lead storage batteries with a battery size of Q-85 (sample No. 26 to No. 49) were produced by the following method.

As shown in Table 13, the liquid lead storage batteries of sample No. 26 to No. 49 differ from each other in configurations of the pore diameter ($\mu$m) and the porosity (%) of the positive electrode mixture, but are the same as sample No. 8 other than that. To explain with reference to FIG. 2, the liquid lead storage batteries of sample No. 26 to No. 49 are configured such that, in the positive electrode current collector 5, the width (the horizontal dimension) of the grid-like substrate 51 is 135 mm, and the height (the vertical dimension) thereof is 114.5 mm. These dimensions are each a distance between the center lines of the frame bones. The cross-sectional areas of the left frame bone 513, the right frame bone 514, and the lower frame bone 512 are each 1.80 mm$^2$.

First, current collectors (a grid-like substrate and a lug for each) for positive electrode plates and negative electrode plates were produced by a punching method from a rolled plate made of a Pb-Ca-Sn alloy. In a cross section of the current collector taken along its thickness direction, rolled texture with an average interlayer distance of 20 um was observed.

The weight of each of the positive electrode current collectors is 40.0 g. When variously changing the vertical width ratio of the vertical intermediate bones 516, the vertical widths of the intermediate bones were changed simultaneously so as to make the weights of the positive electrode current collectors equal to each other among all the samples.

In the positive electrode current collectors 5 included in the liquid lead storage batteries of sample No. 26 to No. 30, the configurations of the grid-like substrates 51 are the same as sample No. 8, the pore diameters of positive electrode mixtures held in the grid-like substrates 51 are all 0.10 um, and the porosities thereof are respectively 20%, 30%, 40%, 50%, and 60%.

In the positive electrode current collectors 5 included in the liquid lead storage batteries of sample No. 31 to No. 35, the configurations of the grid-like substrates 51 are the same as sample No. 8, the pore diameters of positive electrode mixtures held in the grid-like substrates 51 are all 0.15 um, and the porosities thereof are respectively 20%, 30%, 40%, 50%, and 60%.

In the positive electrode current collectors 5 included in the liquid lead storage batteries of sample No. 36 to No. 39, the configurations of the grid-like substrates 51 are the same as sample No. 8, the pore diameters of positive electrode mixtures held in the grid-like substrates 51 are all 0.20 um, and the porosities thereof are respectively 20%, 30%, 40%, 50%, and 60%. Further, in the positive electrode current collector 5 included in the liquid lead storage battery of sample No. 8, the pore diameter is 0.15 $\mu$m, and the porosity is 40%.

In the positive electrode current collectors 5 included in the liquid lead storage batteries of sample No. 40 to No. 44, the configurations of the grid-like substrates 51 are the same as sample No. 8, the pore diameters of positive electrode mixtures held in the grid-like substrates 51 are all 0.40 um, and the porosities thereof are respectively 20%, 30%, 40%, 50%, and 60%.

In the positive electrode current collectors 5 included in the liquid lead storage batteries of sample No. 45 to No. 49, the configurations of the grid-like substrates 51 are the same as sample No. 8, the pore diameters of positive electrode mixtures held in the grid-like substrates 51 are all 0.45 um, and the porosities thereof are respectively 20%, 30%, 40%, 50%, and 60%.

As negative electrode current collectors of sample No. 26 to No. 49, ones having the same shapes and the same cross-sectional areas as those of the positive electrode current collector 5 of sample No. 8 were used.

Next, lead powder mainly composed of lead monoxide was kneaded with water and dilute sulfuric acid and further kneaded as needed by adding additives, thereby producing a paste for positive electrode mixture. The ratio $\alpha/(\alpha+\beta)$ between a mass $\alpha$ of $\alpha$-lead dioxide and a mass $\beta$ of $\beta$-lead dioxide contained in a positive electrode active material after formation was set to 20%. Further, lead powder mainly composed of lead monoxide was kneaded with water and dilute sulfuric acid and further kneaded as needed by adding additives, thereby producing a paste for negative electrode mixture.

Then, after the grid-like substrates of the positive electrode current collectors were filled with the paste for positive electrode mixture, maturation and drying were performed to produce positive electrode plates before formation. Likewise, after the grid-like substrates of the negative electrode current collectors were filled with the paste for negative electrode mixture, maturation and drying were performed to produce negative electrode plates before formation.

The density of the positive electrode mixture included in the positive electrode plates was 4.2 g/cm3, and the density of the negative electrode mixture included in the negative electrode plates was 4.0 g/cm$^3$.

As a separator, there was prepared a ribbed separator made of a porous synthetic resin and having a flat-plate base surface and a fold-like rib protruding in a direction perpendicular to the plane direction of the base surface. The total thickness of the ribbed separator was set to 0.90 mm, the height of the rib was set to 0.65 mm, and the thickness of the base surface was set to 0.25 mm.

The pluralities of produced positive electrode plates and negative electrode plates before formation were alternately stacked with the ribbed separators interposed therebetween, thereby producing an electrode plate group. The number of the positive electrode plates was set to seven, and the number of the negative electrode plates was set to eight.

The electrode plate group was housed in a battery case. The lugs of the positive electrode current collectors of the positive electrode plates were joined together by a positive electrode strap, and the lugs of the negative electrode current collectors of the negative electrode plates were joined together by a negative electrode strap. Then, the positive electrode strap was connected to one end of a positive electrode terminal, and the negative electrode strap was connected to one end of a negative electrode terminal. The battery case included a plurality of cell chambers each housing the electrode plate group, and the volume of each cell chamber was 570 cm$^3$ at its portion not higher than an upper level (highest liquid level line). A predetermined group pressure was applied to the electrode plate groups.

Further, an opening of the battery case was closed with a lid. A positive electrode pole and a negative electrode pole were made to respectively pass through bushings insert-molded to the lid, and welding was performed in a state where the other end of the positive electrode pole and the other end of the negative electrode pole were exposed to the outside of the liquid lead storage battery, thereby producing the positive electrode terminal and the negative electrode terminal. An electrolytic solution composed of dilute sulfuric acid with a specific gravity of 1.23 and containing aluminum sulfate in a concentration of 0.1 mol/L was injected to the upper level of the battery case through a liquid injection port formed in the lid, then the liquid injection port was sealed with a plug, and then battery case formation was performed, thereby obtaining the liquid lead storage battery.

The time from the injection of the electrolytic solution until the start of energization for the formation (i.e., the soaking time) was set to 30 minutes, the amount of electricity for the formation was set to 230%, and the temperature of the electrolytic solution in the formation was set to 45°C. In this event, the amount of the injected electrolytic solution was 375cm$^3$ for each cell chamber. The specific gravity of the electrolytic solution after the formation was 1.28.

For later breakdown studies, a plurality of liquid lead storage batteries was produced for each lot and regarded to have the same structure and the same battery characteristics when they belonged to the same lot.

With respect to the liquid lead storage batteries of sample No. 26 to No. 49 thus obtained, a life test was performed at 75°C to examine the number of cycles up to life.

Conditions of the life test were as follows. First, in a 75°C environment, 300A discharge for 2 seconds, CCCV charge (14.5 V, maximum charging current 50 A) for 60 minutes, 25A discharge for 5 minutes, and CCCV charge (14.5 V, maximum charging current 50 A) for 30 minutes were performed in this order as one cycle, and the plurality of cycles was repeated, and when the voltage in each discharge was reduced to 7.2 V, it was determined that the life was reached, and the number of cycles performed up to then was determined as a life.

The results of the life test were evaluated using the following criteria. When the number of cycles was 360 or more and less than 370, "O" was given. When the number of cycles was 370 or more, "◎" was given by determining that it was particularly excellent.

The utilization rate of the active material was obtained by measuring the discharge capacity after performing a 5-hour rate discharge test. When the measured value of the discharge capacity was equal to or more than 32 Ah being the rated capacity of the liquid lead storage battery of Q-85 size, "◎" was given by determining that the utilization rate was significantly excellent. When the measured value of the discharge capacity was 30 Ah or more and less than 32 Ah, "O" was given by determining that the utilization rate was sufficiently excellent, but could not be said to be significantly excellent.

With respect to a total determination, assuming that "◎ = 2" and "O = 1" in determinations of the life test and the 5-hour rate discharge test, respectively, "O" was given when the total score was 2 to 3 points, and "◎" was given when the total score was 4 points.

The above results are collectively shown in Table 10.

[Table 10]

| No. | Cross-sectional area ratio (upper frame bone/horizontal intermediate bone average) (%) | Opening area ratio (%) | Pore Diameter (μm) | Porosity (%) | 5HR Capacity (Ah) | Capacity Determination | Cycle life | Life Determination | Total determination |
|---|---|---|---|---|---|---|---|---|---|
| 26 | 235 | 65 | 0.10 | 20 | 30.1 | ○ | 362 | ○ | ○ |
| 27 | | | 0.10 | 30 | 30.6 | ○ | 363 | ○ | ○ |
| 28 | | | 0.10 | 40 | 31.0 | ○ | 366 | ○ | ○ |
| 29 | | | 0.10 | 50 | 31.2 | ○ | 369 | ○ | ○ |
| 30 | | | 0.10 | 60 | 31.2 | ○ | 360 | ○ | ○ |
| 31 | | | 0.15 | 20 | 31.8 | ○ | 361 | ○ | ○ |
| 32 | | | 0.15 | 30 | 33.2 | ◎ | 371 | ◎ | ◎ |
| 33 | | | 0.15 | 40 | 33.2 | ◎ | 381 | ◎ | ◎ |
| 34 | | | 0.15 | 50 | 32.8 | ◎ | 375 | ◎ | ◎ |
| 35 | | | 0.15 | 60 | 32.7 | ◎ | 362 | ○ | ○ |
| 36 | | | 0.20 | 20 | 31.7 | ○ | 366 | ○ | ○ |
| 37 | | | 0.20 | 30 | 32.8 | ◎ | 379 | ◎ | ◎ |
| 8 | | | 0.20 | 40 | 32.8 | ◎ | 3Θ3 | ◎ | ◎ |
| 38 | | | 0.20 | 50 | 32.9 | ◎ | 374 | ◎ | ◎ |
| 39 | | | 0.20 | 60 | 32.7 | ◎ | 363 | ○ | ○ |
| 40 | | | 0.40 | 20 | 32.0 | ◎ | 361 | ○ | ○ |
| 41 | | | 0.40 | 30 | 32.7 | ◎ | 370 | ◎ | ◎ |
| 42 | | | 0.40 | 40 | 33.0 | ◎ | 383 | ◎ | ◎ |
| 43 | | | 0.40 | 50 | 32.9 | ◎ | 373 | ◎ | ◎ |
| 44 | | | 0.40 | 60 | 32.9 | ◎ | 365 | ○ | ○ |
| 45 | | | 0.45 | 20 | 32.3 | ◎ | 366 | ○ | ○ |
| 46 | | | 0.45 | 30 | 33.3 | ◎ | 367 | ○ | ○ |
| 47 | | | 0.45 | 40 | 32.8 | ◎ | 367 | ○ | ○ |
| 48 | | | 0.45 | 50 | 33.0 | ◎ | 364 | ○ | ○ |

(continued)

| No. | Cross-sectional area ratio (upper frame bone/horizontal intermediate bone average) (%) | Opening area ratio (%) | Pore Diameter (μm) | Porosity (%) | 5HR Capacity (Ah) | Capacity Determination | Cycle life | Life Determination | Total determination |
|---|---|---|---|---|---|---|---|---|---|
| 49 | | | 0.45 | 60 | 33.2 | ◎ | 361 | ○ | ○ |

From the test results of Table 10, it is seen that there is a tendency that the liquid lead storage battery having particularly excellent life cycle and discharge capacity can be obtained when the pore diameter of the positive electrode mixture is 0.15 um to 0.40 um and the porosity of the positive electrode mixture is 30% to 50%.

[Comparative Test for Preferred Mode 3]

Liquid lead storage batteries with a battery size of Q-85 (sample No. 50 to No. 56) were produced by the following method. As shown in Table 11, the liquid lead storage batteries of sample No. 50 to No. 56 differ from each other in that, among vertical intermediate bones of positive electrode current collectors, the cross-sectional areas of the vertical intermediate bones having connection points to lower portions of lugs differ from each other, but are the same as sample No. 8 other than that. To explain with reference to FIG. 2, the liquid lead storage batteries of sample No. 50 to No. 56 are configured such that, in the positive electrode current collector 5, the width (the horizontal dimension) of the grid-like substrate 51 is 135 mm, and the height (the vertical dimension) thereof is 114.5 mm. These dimensions are each a distance between the center lines of the frame bones. The cross-sectional areas of the left frame bone 513, the right frame bone 514, and the lower frame bone 512 are each 1.80 mm$^2$. The cross-sectional area of the upper frame bone 511 forming the grid-like substrate 51 is 2.23 mm$^2$, and the cross-sectional areas of all the horizontal intermediate bones 517 are 0.95 mm$^2$. That is, the vertical width ratio of the upper frame bone 511 to the horizontal intermediate bone 517 is 235%. The average opening area in plan view of the openings contacting the upper frame bone 511 is 65%.

First, current collectors (a grid-like substrate and a lug for each) for positive electrode plates and negative electrode plates were produced by a punching method from a rolled plate made of a Pb-Ca-Sn alloy. In a cross section of the current collector taken along its thickness direction, rolled texture with an average interlayer distance of 20 um was observed.

The weight of each of the positive electrode current collectors is 40.0 g. When variously changing the vertical width ratio of the vertical intermediate bones 516, the vertical widths of the intermediate bones were changed simultaneously so as to make the weights of the positive electrode current collectors equal to each other among all the samples.

The range in which the start points of the second vertical intermediate bones 74 to 76 (the connection points to the upper frame bone) are present is between positions where the distance from the first reference line S1 becomes 80 and 105 (i.e., the range located under the lug).

The first vertical intermediate bones 63 to 66 connect the upper frame bone 511 and the lower frame bone 512 to each other, but the first vertical intermediate bones 61, 62 do not reach the lower frame bone 512 and connect the upper frame bone 511 and the horizontal intermediate bones 517 to each other. The second vertical intermediate bones 71 to 78 connect the upper frame bone 511 and the lower frame bone 512 to each other, but the second vertical intermediate bones 79, 80 do not reach the lower frame bone 512 and connect the upper frame bone 511 and the horizontal intermediate bones 517 to each other. As illustrated in FIG. 3, lines extending the first vertical intermediate bones 61 to 66 downward below the lower frame bone 512 converge to a single point. This convergence point P1 is located outward of an extension line L513 of the left frame bone 513. Lines extending the second vertical intermediate bones 71 to 80 upward above the upper frame bone 511 converge to a single point. This convergence point P2 is located inward of an extension line L514 of the right frame bone 514.

In the positive electrode current collector 5 included in the liquid lead storage battery of sample No. 50, the cross-sectional areas of the second vertical intermediate bones 74 to 76 and the vertical intermediate bone 516 connected to the lower portion of the lug 11 are 1.20 times the average cross-sectional area of all the vertical intermediate bones.

In the positive electrode current collector 5 included in the liquid lead storage battery of sample No. 51, the cross-sectional areas of the second vertical intermediate bones 74 to 76 and the vertical intermediate bone 516 connected to the lower portion of the lug 11 are 1.26 times the average cross-sectional area of all the vertical intermediate bones.

In the positive electrode current collector 5 included in the liquid lead storage battery of sample No. 52, the cross-sectional areas of the second vertical intermediate bones 74 to 76 and the vertical intermediate bone 516 connected to the lower portion of the lug 11 are 1.30 times the average cross-sectional area of all the vertical intermediate bones.

In the positive electrode current collector 5 included in the liquid lead storage battery of sample No. 53, the cross-sectional areas of the second vertical intermediate bones 74 to 76 and the vertical intermediate bone 516 connected to the lower portion of the lug 11 are 1.35 times the average cross-sectional area of all the vertical intermediate bones.

In the positive electrode current collector 5 included in the liquid lead storage battery of sample No. 54, the cross-sectional areas of the second vertical intermediate bones 74 to 76 and the vertical intermediate bone 516 connected to the lower portion of the lug 11 are 1.40 times the average cross-sectional area of all the vertical intermediate bones.

In the positive electrode current collector 5 included in the liquid lead storage battery of sample No. 55, the cross-sectional areas of the second vertical intermediate bones 74 to 76 and the vertical intermediate bone 516 connected to the lower portion of the lug 11 are 1.50 times the average cross-sectional area of all the vertical intermediate bones.

In the positive electrode current collector 5 included in the liquid lead storage battery of sample No. 56, the cross-sectional areas of the second vertical intermediate bones 74 to 76 and the vertical intermediate bone 516 connected to the lower portion of the lug 11 are 1.60 times the average cross-sectional area of all the vertical intermediate bones.

As negative electrode current collectors of sample No. 50 to No. 56, ones having the same shapes and the same cross-sectional areas as those of the positive electrode current collector 5 of sample No. 8 were used.

Next, lead powder mainly composed of lead monoxide was kneaded with water and dilute sulfuric acid and further kneaded as needed by adding additives, thereby producing a paste for positive electrode mixture. The ratio $\alpha/(\alpha+\beta)$ between a mass $\alpha$ of $\alpha$-lead dioxide and a mass $\beta$ of $\beta$-lead dioxide contained in a positive electrode active material after formation was set to 20%. Further, lead powder mainly composed of lead monoxide was kneaded with water and dilute sulfuric acid and further kneaded as needed by adding additives, thereby producing a paste for negative electrode mixture.

Then, after the grid-like substrates of the positive electrode current collectors were filled with the paste for positive electrode mixture, maturation and drying were performed to produce positive electrode plates before formation. Likewise, after the grid-like substrates of the negative electrode current collectors were filled with the paste for negative electrode mixture, maturation and drying were performed to produce negative electrode plates before formation.

The density of the positive electrode mixture included in the positive electrode plates was 4.2 g/cm3, and the density of the negative electrode mixture included in the negative electrode plates was 4.0 g/cm$^3$.

As a separator, there was prepared a ribbed separator made of a porous synthetic resin and having a flat-plate base surface and a fold-like rib protruding in a direction perpendicular to the plane direction of the base surface. The total thickness of the ribbed separator was set to 0.90 mm, the height of the rib was set to 0.65 mm, and the thickness of the base surface was set to 0.25 mm.

The pluralities of produced positive electrode plates and negative electrode plates before formation were alternately stacked with the ribbed separators interposed therebetween, thereby producing an electrode plate group. The number of the positive electrode plates was set to seven, and the number of the negative electrode plates was set to eight.

The electrode plate group was housed in a battery case. The lugs of the positive electrode current collectors of the positive electrode plates were joined together by a positive electrode strap, and the lugs of the negative electrode current collectors of the negative electrode plates were joined together by a negative electrode strap. Then, the positive electrode strap was connected to one end of a positive electrode terminal, and the negative electrode strap was connected to one end of a negative electrode terminal. The battery case included a plurality of cell chambers each housing the electrode plate group, and the volume of each cell chamber was 570 cm$^3$ at its portion not higher than an upper level (highest liquid level line). A predetermined group pressure was applied to the electrode plate groups.

Further, an opening of the battery case was closed with a lid. A positive electrode pole and a negative electrode pole were made to respectively pass through bushings insert-molded to the lid, and welding was performed in a state where the other end of the positive electrode pole and the other end of the negative electrode pole were exposed to the outside of the liquid lead storage battery, thereby producing the positive electrode terminal and the negative electrode terminal. An electrolytic solution composed of dilute sulfuric acid with a specific gravity of 1.23 and containing aluminum sulfate in a concentration of 0.1 mol/L was injected to the upper level of the battery case through a liquid injection port formed in the lid, then the liquid injection port was sealed with a plug, and then battery case formation was performed, thereby obtaining the liquid lead storage battery.

The time from the injection of the electrolytic solution until the start of energization for the formation (i.e., the soaking time) was set to 30 minutes, the amount of electricity for the formation was set to 230%, and the temperature of the electrolytic solution in the formation was set to 45°C. In this event, the amount of the injected electrolytic solution was 375cm$^3$ for each cell chamber. The specific gravity of the electrolytic solution after the formation was 1.28.

For later breakdown studies, a plurality of liquid lead storage batteries was produced for each lot and regarded to have the same structure and the same battery characteristics when they belonged to the same lot.

With respect to the liquid lead storage batteries of sample No. 50 to No. 56 thus obtained, a life test was performed at 75°C to examine the number of cycles up to life.

Conditions of the life test were as follows. First, in a 75°C environment, 300A discharge for 2 seconds, CCCV charge (14.5 V, maximum charging current 50 A) for 60 minutes, 25A discharge for 5 minutes, and CCCV charge (14.5 V, maximum charging current 50 A) for 30 minutes were performed in this order as one cycle, and the plurality of cycles was repeated, and when the voltage in each discharge was reduced to 7.2 V, it was determined that the life was reached, and the number of cycles performed up to then was determined as a life.

The results of the life test were evaluated using the following criteria. When the number of cycles was 360 or more and less than 370, "O" was given. When the number of cycles was 370 or more, "◎" was given by determining that it was particularly excellent.

The utilization rate of the active material was obtained by measuring the discharge capacity after performing a 5-hour rate discharge test. When the measured value of the discharge capacity was equal to or more than 32 Ah being the rated capacity of the liquid lead storage battery of Q-85 size, "◎" was given by determining that the utilization rate was significantly excellent. When the measured value of the discharge capacity was 30 Ah or more and less than 32 Ah, "O" was given by determining that the utilization rate was sufficiently excellent, but could not be said to be significantly excellent.

With respect to a total determination, assuming that "◎ = 2" and "O = 1" in determinations of the life test and the 5-hour rate discharge test, respectively, "O" was given when the total score was 2 to 3 points, and "◎" was given when the total score was 4 points.

The above results are collectively shown in Table 11.

[Table 11]

| No. | Cross-sectional area ratio between vertical intermediate bones (right under lug/average) (%) | 5HR Capacity (Ah) | Capacity Determination | Cycle life | Life Determination | Total determination |
|---|---|---|---|---|---|---|
| 50 | 120 | 31.6 | ○ | 366 | ○ | ○ |
| 51 | 1.26 | 32.7 | ◎ | 379 | ◎ | ◎ |
| 52 | 1.30 | 32.8 | ◎ | 383 | ◎ | ◎ |
| 53 | 1.35 | 32.9 | ◎ | 374 | ◎ | ◎ |
| 54 | 1.40 | 32.7 | ◎ | 377 | ◎ | ◎ |
| 55 | 1.50 | 32.7 | ◎ | 376 | ◎ | ◎ |
| 56 | 1.60 | 32.8 | ◎ | 363 | ○ | ○ |

From the test results of Table 11, it is seen that there is a tendency that the liquid lead storage battery having particularly excellent life cycle and discharge capacity can be obtained when the cross-sectional areas of the vertical intermediate bones connected to the lower portion of the lug are 1.26 times or more the average cross-sectional area of all the vertical intermediate bones.

However, there was observed a tendency of a decrease in cycle life when the cross-sectional areas of the vertical intermediate bones connected to the lower portion of the lug of the positive electrode grid exceeded 1.50 times. Although the reason for this is not clear, it is conjectured that, by locally thickening the vertical intermediate bones, the direct current resistance under the lug was reduced to cause frequent transfer of electrons of the positive electrode active material, so that corrosion was locally promoted to cause accelerated progress of degradation of the positive electrode grid under the lug. Actually, in the broken-down liquid lead storage battery of sample No. 56, corrosion of the vertical intermediate bones and softening of the positive electrode mixture were significantly observed under the lug of the positive electrode grid.

That is, by setting the cross-sectional areas of the vertical intermediate bones connected to the lower portion of the lug of the positive electrode grid to 1.26 times or more and 1.50 times or less the average cross-sectional area of all the vertical intermediate bones, the liquid lead storage battery having particularly excellent life cycle and discharge capacity can be obtained.

Reference Signs List

| | |
|---|---|
| 1 | electrode plate group |
| 10 | positive electrode plate |
| 11 | lug continuous with grid-like substrate |
| 20 | negative electrode plate |
| 30 | separator |
| 41 | battery case |
| 5 | positive electrode current collector |
| 51 | grid-like substrate |
| 50 | positive electrode current collector |
| 510 | grid-like substrate |
| 511 | upper frame bone |
| 512 | lower frame bone |
| 513 | left frame bone |
| 514 | right frame bone |

| 516 | vertical intermediate bone |
| 517 | horizontal intermediate bone |
| 61 to 66 | first vertical intermediate bones |
| 71 to 85 | second vertical intermediate bones |
| 91 | reinforcing bone |
| 92 to 94 | reinforcing bones |

**Claims**

1. A liquid lead storage battery comprising a positive electrode plate including a positive electrode current collector and a positive electrode mixture, wherein:

   the positive electrode current collector includes a grid-like substrate with a rectangular shape and a lug continuous with the grid-like substrate;
   the positive electrode mixture is held in the grid-like substrate;
   the grid-like substrate includes a frame bone forming four sides of the rectangular shape, and a plurality of intermediate bones connected to the frame bone and present inward of the frame bone;
   the frame bone includes an upper frame bone located on an upper side of the grid-like substrate and extending in a horizontal direction, a lower frame bone located on a lower side of the grid-like substrate and extending in the horizontal direction, and a pair of vertical frame bones extending in a vertical direction;
   the lug protrudes upward from a position offset from a center of the upper frame bone in a longitudinal direction to a side closer to either of the pair of vertical frame bones;
   the plurality of intermediate bones includes a plurality of vertical intermediate bones extending from the upper frame bone toward the lower frame bone side or from the lower frame bone toward the upper frame bone side, and a plurality of horizontal intermediate bones extending from one of the pair of vertical frame bones toward the other side or from the other of the pair of vertical frame bones toward the one side;
   at least part of a plurality of the vertical intermediate bones present in a range between a center between the pair of vertical frame bones and a first vertical frame bone being the vertical frame bone on a side where the lug is not present, are first vertical intermediate bones extending from the lower frame bone side toward the upper frame bone side while obliquely expanding from each other, and directly reaching the upper frame bone;
   the vertical intermediate bones extending from the lower frame bone side toward the upper frame bone side while obliquely expanding from each other all directly reach the upper frame bone;
   angles formed by the first vertical intermediate bones and the upper frame bone on the first vertical frame bone side are less than 90°; and
   connection points of the first vertical intermediate bones to the upper frame bone are present only in the range.

2. The liquid lead storage battery according to claim 1, wherein the range in which the connection points of the first vertical intermediate bones to the upper frame bone are present is only up to a position where a distance from the first vertical frame bone becomes 2/5 of a distance between the pair of vertical frame bones.

3. The liquid lead storage battery according to claim 1 or 2, wherein at least part of a plurality of the vertical intermediate bones present in a range between the center between the pair of vertical frame bones and a second vertical frame bone being the vertical frame bone on a side where the lug is present, are second vertical intermediate bones extending from the upper frame bone toward the lower frame bone side while obliquely expanding from each other.

4. The liquid lead storage battery according to claim 2, wherein:

   at least part of a plurality of the vertical intermediate bones present in a range between the center between the pair of vertical frame bones and a second vertical frame bone being the vertical frame bone on a side where the lug is present, are second vertical intermediate bones extending from the upper frame bone toward the lower frame bone side while obliquely expanding from each other; and
   a range in which connection points of the second vertical intermediate bones to the upper frame bone are present is only up to a position where a distance from the second vertical frame bone becomes 3/5 of the distance between the pair of vertical frame bones.

5. The liquid lead storage battery according to claim 3 or 4, wherein lines extending the first vertical intermediate bones downward below the lower frame bone converge to a single point, and lines extending the second vertical intermediate bones upward above the upper frame bone converge to a single point.

6. The liquid lead storage battery according to any one of claims 1 to 5, wherein the rectangular shape forming the frame bone is a shape in which the side in the horizontal direction is longer than the side in the vertical direction.

# FIG. 1

FIG. 2

FIG. 3

# FIG. 4

EP 4 195 333 A1

FIG. 5

FIG. 6

EP 4 195 333 A1

# FIG. 7

FIG. 8

FIG. 9

FIG. 10

FIG. 11

FIG. 12

FIG. 13

FIG. 14

## INTERNATIONAL SEARCH REPORT

| International application No. |
| --- |
| PCT/JP2021/017266 |

### A. CLASSIFICATION OF SUBJECT MATTER
Int. Cl. H01M4/72(2006.01)i, H01M4/73(2006.01)i
FI: H01M4/73 A, H01M4/72 A

According to International Patent Classification (IPC) or to both national classification and IPC

### B. FIELDS SEARCHED
Minimum documentation searched (classification system followed by classification symbols)
Int. Cl. H01M4/72, H01M4/73

Documentation searched other than minimum documentation to the extent that such documents are included in the fields searched
Published examined utility model applications of Japan     1922-1996
Published unexamined utility model applications of Japan   1971-2021
Registered utility model specifications of Japan           1996-2021
Published registered utility model applications of Japan   1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2017-183278 A (THE FURUKAWA BATTERY CO., LTD.) 05 October 2017 (2017-10-05), fig. 1 | 1-6 |
| Y | JP 2014-197456 A (THE FURUKAWA BATTERY CO., LTD.) 16 October 2014 (2014-10-16), fig. 1 | 1-6 |
| Y | JP 2002-042821 A (SHIN-KOBE ELECTRIC MACHINERY CO., LTD.) 08 February 2002 (2002-02-08), claims, paragraph [0014], fig. 1 | 1-6 |
| A | JP 2018-073789 A (GS YUASA INTERNATIONAL LTD.) 10 May 2018 (2018-05-10), fig. 2 | 1-6 |

☒ Further documents are listed in the continuation of Box C.   ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 29.06.2021 | 20.07.2021 |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2021/017266 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | WO 2016/194328 A1 (GS YUASA INTERNATIONAL LTD.) 08 December 2016 (2016-12-08), entire text, all drawings | 1-6 |
| A | JP 2011-503829 A (FIREFLY ENERGY INC.) 27 January 2011 (2011-01-27), entire text, all drawings | 1-6 |
| A | JP 10-116610 A (YUASA CORPORATION) 06 May 1998 (1998-05-06), entire text, all drawings | 1-6 |

Form PCT/ISA/210 (continuation of second sheet) (January 2015)

International application No.

PCT/JP2021/017266

| Patent Documents referred to in the Report | Publication Date | Patent Family | Publication Date |
|---|---|---|---|
| JP 2017-183278 A | 05.10.2017 | (Family: none) | |
| JP 2014-197456 A | 16.10.2014 | (Family: none) | |
| JP 2002-042821 A | 08.02.2002 | (Family: none) | |
| JP 2018-073789 A | 10.05.2018 | (Family: none) | |
| WO 2016/194328 A1 | 08.12.2016 | US 2018/0151886 A1 entire text, all drawings EP 3306715 A1 CN 107615535 A | |
| JP 2011-503829 A | 27.01.2011 | US 2009/0130549 A1 entire text, all drawings WO 2009/067126 A1 KR 10-2010-0100895 A CN 101911350 A | |
| JP 10-116610 A | 06.05.1998 | (Family: none) | |

Form PCT/ISA/210 (patent family annex) (January 2015)

**REFERENCES CITED IN THE DESCRIPTION**

**Patent documents cited in the description**

- JP 2019067522 A
- JP 2002042821 A